# EUROPÄISCHE PATENTANMELDUNG

(11) **EP 4 552 884 A1**
(43) Veröffentlichungstag der Anmeldung: **14.05.2025**
(21) Anmeldenummer: 24211745.5
(22) Anmeldetag: 08.11.2024
(51) Int. Cl.: B60K 1/04

(54) **TRAKTORTEILSTRUKTUR FÜR EINE ELEKTRISCH ANGETRIEBENE LANDWIRTSCHAFTLICHE ZUGMASCHINE**

(30) Priorität: 10.11.2023 DE 102023131380
(71) Anmelder: Tadus GmbH, 83530 Schnaitsee (DE)
(72) Erfinder: Baier, Thaddäus, 83530 Schnaitsee (DE)
(74) Vertreter: BSB Patentanwälte Schütte & Engelen Partnerschaft mbB

(57) **Zusammenfassung**

Traktorteilstruktur (1) für eine elektrisch angetriebene landwirtschaftliche Zugmaschine (10) mit einem Fahrzeugrahmen (2) und einer in einem Aufnahmeraum (5) aufgenommenen Energiespeichereinheit (6). Dabei ist der Aufnahmeraum (5) in den Fahrzeugrahmen (2) integriert. Der Fahrzeugrahmen (2) stellt mittels einer unteren Längsträgerstruktur (12) und einer oberen Längsträgerstruktur (22) und einer die obere und die untere Längsträgerstruktur (12, 22) beabstandet miteinander verbindende Bockstruktur (32) eine Umschließungsstruktur (42) bereit, welche den Aufnahmeraum (5) nach vorne und hinten sowie nach oben und unten umschließt.

## Beschreibung

Die vorliegende Erfindung betrifft eine Traktorteilstruktur für eine elektrisch angetriebene landwirtschaftliche Zugmaschine mit einem Fahrzeugrahmen und einer an dem Fahrzeugrahmen aufgenommenen elektrischen Antriebseinrichtung und wenigstens einem Aufnahmeraum zur Unterbringung wenigstens einer Energiespeichereinheit zur Energieversorgung der Antriebseinrichtung. An dem Fahrzeugrahmen sind wenigstens zwei Achseinheiten aufgenommen.

Elektrisch angetriebene landwirtschaftliche Zugmaschinen, häufig als Traktor oder Schlepper bezeichnet, bieten neben ökologischen auch viele wirtschaftliche Vorteile. So verfügen landwirtschaftliche Betriebe häufig über Gebäude mit großen Dachflächen, welche mit Photovoltaikanlagen ausgestattet sind. Der damit erzeugte Solarstrom kann zum Aufladen der Energiespeichereinheiten bzw. Traktionsbatterien eingesetzt werden, sodass der Traktor kostengünstig und zugleich nachhaltig mit Energie versorgt wird. Ein elektrischer Traktor mit Knicklenkung ist beispielsweise aus der US 4 662 472 A bekannt.

Um die Einsatzbereitschaft des Traktors durch den Ladevorgang nicht einzuschränken, sind auswechselbare Traktionsbatterien bekannt geworden. Zudem können die Traktionsbatterien auch als Pufferspeicher für die Photovoltaikanlage eingesetzt werden. Entscheidend ist jedoch, dass die Traktionsbatterie möglichst zügig und einfach ausgetauscht werden kann. Zudem sollte die Batteriekapazität so ausgelegt sein, dass möglichst selten ein Wechsel nötig wird, da dazu meist die Rückfahrt zum Hof bzw. eine Unterbrechung der Arbeit notwendig ist. Eine große Batteriekapazität steht jedoch in einem Zielkonflikt mit der Anforderung, dass die Traktionsbatterie möglichst kompakt und leicht ist, damit sie wenig Bauraum benötigt und das Gewicht des Traktors nicht unnötig erhöht.

Des Weiteren sollte die Unterbringung der Energiespeichereinheit so erfolgen, dass die Sicht auf Anbaugeräte und die zu bearbeitende Fläche möglichst nicht oder nur geringfügig eingeschränkt wird. Zudem sollte die Energiespeichereinheit nicht im Weg sein, wenn Anbaugeräte an einem Heck- bzw. Frontkraftheber angekuppelt werden müssen. Der Wechselvorgang sollte auch mit angekuppelten Anbaugeräten möglich sein.

Zu bedenken ist auch, dass Traktoren in der Regel mit zahlreichen Aggregaten und Systemen ausgestattet sind, wie zum Beispiel einer umfangreichen Arbeitshydraulik und einer Zapfwelleneinrichtung. Daher steht für die Energiespeichereinheit oft nur sehr wenig Bauraum zur Verfügung oder er muss mit großem konstruktiven Aufwand geschaffen werden. Insgesamt ergeben sich daher oft große Schwierigkeiten, einen schnellen und unaufwendigen Batteriewechsel zu ermöglichen und die Gebrauchstauglichkeit des Traktors nicht einzuschränken.

Problematisch ist oft die Unterbringung einer als Wasserstofftank ausgebildeten Energiespeichereinheit. Zusätzlich zu den zuvor diskutierten Schwierigkeiten müssen bei einem Wasserstofftank noch spezielle Sicherheitsaspekte berücksichtigt werden. Der Tank darf im Arbeitseinsatz des Traktors keinesfalls beschädigt werden. Beispielsweise sind Traktoren bekannt geworden, bei denen der Tank auf dem Dach des Fahrerhauses angeordnet ist.

Ein Traktor mit einer auswechselbaren Traktionsbatterie ist aus der CN 115 056 679 A bekannt. Der Aufnahmeraum ist über der Vorderachse bzw. dort angeordnet, wo üblicherweise der Verbrennungsmotor ist. Bei geöffneter Fronthaube kann die Traktionsbatterie ausgetauscht werden. Dadurch stehen jedoch nur ein sehr begrenzter Bauraum und somit eine eher geringe Batteriekapazität bereit.

Die EP 4 116 137 A1 schlägt daher vor, unter der Fronthaube eine Erstbatterie anzuordnen und eine Zweitbatterie frontseitig oder heckseitig anzukuppeln. Dadurch wird jedoch die Verwendung von Anbaugeräten oder Anhängern eingeschränkt.

Aus der WO 2023 287 660 A1 ist ein Infrastruktursystem mit elektrischen Nutzfahrzeugen und austauschbaren Batterien und Batteriewechseltankstellen bekannt. Hinsichtlich der konstruktiven Unterbringung der Batterie im Fahrzeug wird vorgeschlagen, eine Schublade am Fahrzeug anzubringen, in welche die Batterie seitlich eingeschoben werden kann. Die Schublade ist zwischen den Achsen angeordnet. Allerdings steht dort bei einem Traktor in der Regel nur sehr wenig Bauraum zur Verfügung.

Aus der US 2022 0 363 160 A1 ist ein Traktor bekannt, dessen elektrischer Antrieb mittels einer Vielzahl kleiner, dezentral verteilter Batterien versorgt wird. Ein Teil der Batterien ist austauschbar in jeweils einer Batterieaufnahme untergebracht. Dadurch kann der vorhandene Bauraum gut ausgenutzt werden. Zudem soll dadurch auf eine aufwendige konstruktive Veränderung der vorhandenen Tragstrukturen verzichtet werden können. Allerdings wird der Wechselvorgang durch die Vielzahl an Batterien erschwert.

Die WO 2022 099 183 A1 beschreibt ein Batteriewechselsystem für elektrisch angetriebene Traktoren. Die Batterie befindet sich über der Vorderachse und kann mittels eines Wagens transportiert und passend zum Traktor ausgerichtet werden. Dann wird die Batterie vom Wagen aus von vorne in den Traktor eingeschoben. Der Traktor hat einen Fahrzeugrahmen, der durch einen zentralen Längsträger gebildet wird. Auf den Längsträger ist ein Nutzlast-Hilfsrahmen aufgesetzt, der sich an den A-Säulen der Kabine abstützt und auch zur Befestigung der Cockpit-Instrumententafel dient.

Demgegenüber ist es die Aufgabe der vorliegenden Erfindung, eine Traktorteilstruktur für eine landwirtschaftliche Zugmaschine bereitzustellen, welche die zuvor diskutierten Anforderungen möglichst weitgehend erfüllt. Insbesondere soll durch die Unterbringung der Energiespeichereinheit die Funktionalität und Einsatzfähigkeit des Traktors nicht ungünstig beeinflusst werden. Zudem soll die Energiespeichereinheit besonders sicher und zugleich möglichst gut zugänglich (z. B. für Wartungsarbeiten) untergebracht sein. Bei einer auswechselbaren Energiespeichereinheit sollte der Wechselvorgang möglichst zügig und unaufwendig möglich sein. Insbesondere soll eine Lösung bereitgestellt werden, welche konstruktiv unaufwendig und wirtschaftlich umsetzbar ist.

Diese Aufgabe wird gelöst durch eine Traktorteilstruktur mit den Merkmalen des Anspruchs 1. Bevorzugte Weiterbildungen und Ausgestaltungen der Erfindung sind Gegenstand der jeweiligen Unteransprüche. Weitere Vorteile und Merkmale der vorliegenden Erfindung ergeben sich aus der allgemeinen Beschreibung und der Beschreibung der Ausführungsbeispiele.

Die erfindungsgemäße Traktorteilstruktur ist für eine elektrisch angetriebene landwirtschaftliche Zugmaschine, welche auch als Traktor bzw. Schlepper bezeichnet werden kann, vorgesehen. Die Traktorteilstruktur umfasst einen Fahrzeugrahmen und insbesondere eine an dem Fahrzeugrahmen aufgenommene elektrische Antriebseinrichtung. Die Antriebseinrichtung ist mittels wenigstens einer Energiespeichereinheit (direkt oder indirekt) mit elektrischer Energie versorgbar. Insbesondere umfasst die Traktorteilstruktur wenigstens eine Energiespeichereinheit zur Energieversorgung der Antriebseinrichtung. Die Traktorteilstruktur umfasst insbesondere wenigstens zwei (jeweils) an dem Fahrzeugrahmen aufgenommene Achseinheiten. Die Achseinheiten umfassen insbesondere wenigstens eine Vorderachseinheit und wenigstens eine Hinterachseinheit. Die Traktorteilstruktur umfasst wenigstens einen (zwischen den Achseinheiten angeordneten) Aufnahmeraum für die wenigstens eine Energiespeichereinheit. Dabei ist der Aufnahmeraum in den Fahrzeugrahmen integriert. Dabei umfasst der Fahrzeugrahmen eine untere Längsträgerstruktur und eine obere Längsträgerstruktur und eine Bockstruktur. Die Bockstruktur verbindet die obere und die untere Längsträgerstruktur beabstandet miteinander. Der Fahrzeugrahmen stellt mittels der unteren Längsträgerstruktur und der oberen Längsträgerstruktur und der Bockstruktur eine (ringartige) Umschließungsstruktur wenigstens teilweise bereit. Die Umschließungsstruktur umschließt den Aufnahmeraum nach vorne und hinten (bzw. in Fahrzeuglängsrichtung) sowie nach oben und unten (bzw. in Fahrzeughochrichtung) wenigstens teilweise und insbesondere vollumfänglich.

Die erfindungsgemäße Traktorteilstruktur bietet viele Vorteile. Einen erheblichen Vorteil bietet die besondere Integration des Aufnahmeraums in den Fahrzeugrahmen. Dadurch wird eine besonders sichere und zugleich Bauraum sparende und die Funktionalität des Traktors nicht ungünstig beeinflussende Unterbringung der Energiespeichereinheit erreicht. Ein besonderer Vorteil ist, dass der Fahrzeugrahmen trotz der Integration des Aufnahmeraums besonders stabil bzw. belastbar ist und zugleich eine Gewichtsoptimierung bietet. Dadurch kann mit der Erfindung ein leistungsfähiger und praxistauglicher Traktor verwirklicht werden, welcher trotz kompakter Dimensionen eine möglichst große Reichweite bzw. lange Einsatzdauer mit einer Ladung der Energiespeichereinheit bietet. Dabei sind auch größere Batteriekapazitäten bzw. Volumina für Wasserstoff oder dergleichen vorteilhaft umsetzbar. Einen erheblichen Vorteil bietet auch die vom Fahrzeugrahmen bereitgestellte Umschließungsstruktur. Diese ermöglicht eine konstruktiv sehr unaufwendige und wirtschaftlich umsetzbare Integration des Aufnahmeraums in den Fahrzeugrahmen. Zudem ermöglicht die besondere Umschließungsstruktur eine gewichtsoptimierte und zugleich sehr sichere Integration des Aufnahmeraums in den Fahrzeugrahmen. Zugleich ist der Fahrzeugrahmen trotz des integrierten Aufnahmeraums besonders stabil und belastbar. Ein weiterer Vorteil ist, dass sich aufgrund der im Rahmen integrierten Energiespeichereinheit ein sehr günstiger bzw. tiefer Schwerpunkt für die Zugmaschine ergibt, ohne dass jedoch die Bodenfreiheit ungünstig beschränkt wird.

Vorzugsweise ist die wenigstens eine Energiespeichereinheit in dem Aufnahmeraum (mittels einer Haltevorrichtung) auswechselbar aufgenommen. Dadurch kann eine (wenigstens teilweise entladene bzw. leere oder verbrauchte bzw. alte oder defekte) Energiespeichereinheit im Zuge eines Wechselvorgangs gegen eine (andere) (wenigstens teilweise aufgeladene bzw. vollere oder frischere bzw. neue) Energiespeichereinheit ausgetauscht werden.

Die Umschließungsstruktur ist insbesondere an wenigstens einer Fahrzeuglängsseite offen ausgebildet, sodass die Energiespeichereinheit im Zuge des Wechselvorgangs von der wenigstens einen Fahrzeuglängsseite aus bzw. seitlich in den Aufnahmeraum eingebracht und entnommen werden kann. Eine solche Integration des Aufnahmeraums zum seitlichen Auswechseln der Energiespeichereinheit bietet einen erheblichen Vorteil. Das ermöglicht einen besonders zügigen und einfachen Wechselvorgang. Zudem ist der Wechselvorgang auch bei angekuppelten Anbaugeräten möglich.

Vorzugsweise ist die Umschließungsstruktur an beiden Fahrzeuglängsseiten offen ausgebildet. Insbesondere kann die Energiespeichereinheit durch die an wenigstens einer Fahrzeuglängsseite offen ausgebildete Umschließungsstruktur eingesetzt und entnommen werden. Es ist möglich, dass der Aufnahmeraum bzw. die Umschließungsstruktur mittels wenigstens eines Abdeckelements an wenigstens einer Fahrzeuglängsseite vorübergehend verschließbar ist. Dadurch kann z. B. dem Eindringen von Schmutz oder Feuchtigkeit in den Aufnahmeraum entgegen gewirkt werden.

Die Umschließungsstruktur ist insbesondere nach vorn und hinten sowie nach oben und unten ringförmig geschlossen. Insbesondere ragt die Energiespeichereinheit an beiden Fahrzeuglängsseiten aus der Umschließungsstruktur und/oder aus dem Aufnahmeraum heraus. Ein Wechselvorgang kann z. B. zum Zwecke des "Aufladens" oder auch im Rahmen von Service- bzw. Reparaturarbeiten erfolgen. Insbesondere ist die Energiespeichereinheit zeitweise oder auch dauerhaft fest (aber vorzugsweise zerstörungsfrei lösbar) im Aufnahmeraum installierbar. Es kann eine automatische Verriegelung vorgesehen sein, damit die Energiespeichereinheit im Betrieb nicht unerwünscht den Aufnahmeraum verlassen kann. Insbesondere umfasst die Traktorteilstruktur wenigstens eine in dem Aufnahmeraum auswechselbar aufnehmbare Energiespeichereinheit.

Insbesondere sind die untere Längsträgerstruktur und die obere Längsträgerstruktur und die Bockstruktur tragende Bauteile des Fahrzeugrahmens. Insbesondere sind die untere und die obere Längsträgerstruktur und die Bockstruktur für die bestimmungsgemäße Funktion des Fahrzeugrahmens statisch relevante Bauteile. Insbesondere erreicht der Fahrzeugrahmen die zur Aufnahme der gesamten bestimmungsgemäß vorgesehenen Last (Eigenlast und Nutzlast) benötigte Stabilität (nur) durch ein Zusammenwirken der unteren und oberen Längsträgerstruktur und der Bockstruktur. Insbesondere umfasst der Fahrzeugrahmen eine Längsträgeranordnung, unter welcher alle zur Aufnahme der gesamten bestimmungsgemäß vorgesehenen Last benötigten Längsträger verstanden werden. Vorzugsweise wird die Längsträgeranordnung zu einem überwiegenden Teil und insbesondere zu wenigstens 75 % oder zu wenigstens 90 % oder auch vollständig durch die untere Längsträgerstruktur und die obere Längsträgerstruktur bereitgestellt. Insbesondere stellen die untere und die obere Längsträgerstruktur jeweils ein Zug-Druckband des Fahrzeugrahmens dar. Insbesondere stellt die Bockstruktur einen Steg bereit, welcher die Zug-Druckbänder verbindet.

Die untere Längsträgerstruktur und die obere Längsträgerstruktur und die Bockstruktur sind für die Tragfähigkeit des Fahrzeugrahmens essentiell. Insbesondere sind die tragenden Bauteile des Fahrzeugrahmens essentielle (unabdingbare) Bestandteile des Fahrzeugrahmens. Mit anderen Worten, ohne diese tragenden Bauteile kann der Fahrzeugrahmen seine Funktion nicht erfüllen. Beispielsweise kommt es zu unerwünschten Verformungen oder gar zu einer Zerstörung des Fahrzeugrahmens, wenn ein tragendes Bauteil fehlt. Ohne die tragenden Bauteile des Fahrzeugrahmens ist die Traktorteilstruktur bzw. die landwirtschaftliche Zugmaschine insbesondere nicht einsatzfähig bzw. nicht fahrtüchtig. Insbesondere ist die Tragfähigkeit des Fahrzeugrahmens erheblich eingeschränkt, wenn die untere Längsträgerstruktur und/oder die obere Längsträgerstruktur und/oder die Bockstruktur nicht vorhanden sind.

Insbesondere hat der Fahrzeugrahmen die Aufgabe, die bestimmungsgemäß vorgesehene Gesamtmasse der Zugmaschine zu tragen (und diese an die Achseinheiten weiterzugegeben). Insbesondere hat der Fahrzeugrahmen die Aufgabe, die an ihm direkt oder indirekt befestigten Bauteile (z. B. Teile der Antriebseinrichtung, Anbauteile, Fahrerhaus) und die Nutzlast sowie Anbaugeräte (z. B. einen Pflug oder eine Sämaschine) zu tragen. Insbesondere ist der Fahrzeugrahmen auf den Achseinheiten abgestützt. Über die Achseinheiten und die daran befestigbaren Räder bzw. Raupenlaufwerke wird die Gesamtmasse der Zugmaschine dann auf den Boden übertragen. Der Fahrzeugrahmen mit seiner Umschließungsstruktur stellt eine geometrische Ausprägung im Sinne der Gesamtfahrzeugstabilität (statische und dynamische Festigkeit und Steifigkeit) dar.

Durch die Aufteilung in die untere und die obere Längsträgerstruktur werden zwei beabstandete Zug-/Druckbänder erreicht. Durch die Bockstruktur wird ein besonders großer Abstand (Steglänge) zwischen den Zug-/Druckbänder ermöglicht. Insgesamt bietet der Fahrzeugrahmen dadurch trotz seines großen Aufnahmeraums ein besonders großes Biege-Widerstandmoment. Insbesondere können alle statischen und dynamischen Belastungen durch Ein- und Anbauten (z. B. E-Antriebe, Batterie bzw. Aufnahmebehälter, Kabine) und durch Anhänge- und Anbaugeräte (Frontlader, schwere Bodenbearbeitungsgeräte) durch die obere und untere Längsträgerstruktur ein- bzw. abgeleitet werden.

Vorzugsweise ist die Umschließungsstruktur (in Bezug auf die Fahrzeuglängsachse bzw. X-Achse) zwischen den Achseinheiten angeordnet. Vorzugsweise ist der Aufnahmeraum zwischen den Achseinheiten angeordnet. Das ermöglicht eine besonders vorteilhafte Unterbringung des Aufnahmeraums. Insbesondere wird der Aufnahmeraums nach unten und oben durch die Umschließungsstruktur begrenzt. Insbesondere ist die Umschließungsstruktur hinter der Vorderachseinheit und vor der Hinterachseinheit angeordnet. Insbesondere erstreckt sich die Umschließungsstruktur in Fahrzeughochrichtung nach oben über die Achseinheiten hinaus. Insbesondere erstreckt sich die Umschließungsstruktur in Fahrzeughochrichtung nach unten über wenigstens eine der Achseinheiten, insbesondere die Hinterachseinheit, hinaus. Das bietet Vorteile bei einer Bauweise mit unterschiedlich großen Rädern an Vorder- und Hinterachseinheit. Insbesondere verläuft die Umschließungsstruktur abschnittsweise auf einer Höhe mit den Achseinheiten. Insbesondere verläuft die Umschließungsstruktur nicht (wesentlich) tiefer als (eine Unterkante) der Achseinheit mit der kleinsten Radgröße bzw. Bereifung. Insbesondere verläuft die Umschließungsstruktur tiefer als eine Oberkante der Achseinheit mit der größten Radgröße bzw. Bereifung. Die Größe der Räder bezieht sich insbesondere auf deren Durchmesser.

Möglich und vorteilhaft ist, dass sich die Umschließungsstruktur nach unten nicht (wesentlich) über eine Unterkante wenigstens einer der Achseinheiten hinaus erstreckt. Insbesondere betrifft das wenigstens die Vorderachseinheit. Das bietet eine gute Bodenfreiheit beim Überfahren eines Schwads oder dergleichen.

Sofern eine Trac-Bauweise vorgesehen ist, betrifft das vorzugsweise sowohl die Vorderachseinheit als auch die Hinterachseinheit. Dann ragt die Umschließungsstruktur vorzugsweise nicht oder nur unwesentlich nach unten über eine gedachte Linie hinaus, welche sich von der Unterkante der Vorderachseinheit zur Unterkante der Hinterachseinheit erstreckt.

Vorzugsweise ist der Aufnahmeraum wenigstens abschnittsweise (in Bezug auf die Fahrzeughochachse bzw. Z-Achse) höher als die Achseinheiten angeordnet. Vorzugsweise ist der Aufnahmeraum wenigstens abschnittsweise auf einer Z-Ebene mit wenigstens einer der Achseinheiten angeordnet. Insbesondere ist Aufnahmeraum nicht tiefer als (eine Unterkante) wenigstens eine der Achseinheiten (insbesondere als die Vorderachseinheit; bei Trac-Bauweise auch Hinterachseinheit) angeordnet. Insbesondere ist Aufnahmeraum nicht tiefer als (eine Unterkante) der Achseinheit mit der kleinsten Radgröße bzw. Bereifung. Der Aufnahmeraum kann abschnittsweise tiefer als wenigstens eine der Achseinheiten (insbesondere als die Hinterachseinheit) angeordnet sein. Insbesondere liegt der gesamte Aufnahmeraum unterhalb der oberen Längsträgerstruktur und oberhalb eines (nachfolgend beschriebenen) Basisabschnitts der unteren Längsträgerstruktur. Insbesondere ragt der Aufnahmeraum nicht nach oben und/oder unten über die Umschließungsstruktur bzw. den Fahrzeugrahmen hinaus. Durch solche Ausgestaltungen kann auch für große Batterien Bauraum bereitgestellt werden.

Es ist vorteilhaft und bevorzugt, dass die Bockstruktur eine (in Bezug auf die Fahrzeuglängsachse bzw. X-Achse) vor dem Aufnahmeraum angeordnete vordere Bockeinheit und eine hinter dem Aufnahmeraum angeordnete hintere Bockeinheit aufweist. Dabei ist die vordere Bockeinheit mit einem vorderen Endbereich der oberen Längsträgerstruktur verbunden. Die hintere Bockeinheit ist mit einem hinteren Endbereich der oberen Längsträgerstruktur verbunden. Insbesondere erstreckt sich die obere Längsträgerstruktur (nur) zwischen der vorderen und hinteren Bockeinheit. Insbesondere ist die obere Längsträgerstruktur nur an der Bockstruktur tragend befestigt. Die Bockeinheiten umfassen insbesondere jeweils wenigstens einen und vorzugsweise wenigstens zwei beabstandete Hochträger. Die vordere und/oder die hintere Bockeinheit können jeweils einstückig oder auch mehrteilig ausgebildet sein.

Insbesondere ist die vordere Bockeinheit hinter der Vorderachseinheit und insbesondere hinter einer Achsaufnahmestruktur für die Vorderachseinheit (direkt und/oder indirekt) an der unteren Längsträgerstruktur befestigt. Die vordere Bockeinheit kann auch über oder vor der Vorderachseinheit angeordnet sein. Insbesondere ist die vordere Bockeinheit vor dem Aufnahmeraum an der unteren Längsträgerstruktur befestigt. Insbesondere ist die hintere Bockeinheit hinter dem Aufnahmeraum (direkt und/oder indirekt) an der unteren Längsträgerstruktur befestigt. Insbesondere ist die hintere Bockeinheit vor der Hinterachseinheit und insbesondere vor einer Achsaufnahmestruktur für die Hinterachseinheit an der unteren Längsträgerstruktur befestigt. Die hintere Bockeinheit kann auch über oder hinter der Hinterachseinheit bzw. der Achsaufnahmestruktur angeordnet sein. Möglich ist auch, dass die hintere Bockeinheit und/oder die obere Längsträgerstruktur mittels der Trägerkonsole und/oder mittels der Kopplungsstruktur mit der unteren Längsträgerstruktur verbunden sind. Das bietet den Vorteil, dass die hintere Bockeinheit bzw. die obere Längsträgerstruktur und die Trägerkonsole bzw. die Kopplungsstruktur zu wenigstens einem Konstruktionsteil werden. Das ermöglicht eine besonders kompakte Integration der Energiespeichereinheit in den Fahrzeugrahmen.

Es ist bevorzugt und vorteilhaft, dass die untere Längsträgerstruktur wenigstens dort, wo sie sich unterhalb des Aufnahmeraums erstreckt, auf einer Z-Ebene oder tiefer als wenigstens eine der Achseinheiten (insbesondere als die Vorderachseinheit und/oder die Hinterachseinheit) angeordnet ist. Insbesondere ist der (nachfolgend beschriebene) Basisabschnitt der unteren Längsträgerstruktur derart angeordnet. Insbesondere ist die Hinterachseinheit oberhalb der unteren Längsträgerstruktur an der unteren Längsträgerstruktur befestigt. Beispielsweise kann die Hinterachseinheit auf der unteren Längsträgerstruktur befestigt sein. Insbesondere ist die Vorderachseinheit unterhalb der unteren Längsträgerstruktur an der unteren Längsträgerstruktur befestigt.

Es ist möglich, dass die Hinterachseinheit im Wesentlichen mittig (in Bezug auf die Fahrzeughochachse bzw. Z-Achse) zur unteren Längsträgerstruktur angeordnet ist. Es ist möglich, dass die Vorderachseinheit im Wesentlichen mittig (in Bezug auf die Fahrzeughochachse bzw. Z-Achse) zur unteren Längsträgerstruktur angeordnet ist. Das kann z. B. bei einer Trac-Bauweise oder bei sehr geringem Unterschied des Durchmessers von Vorder- und Hinterachsbereifung von Vorteil sein. Insbesondere liegt wenigstens abschnittweise eine Überlappung in Bezug auf die Fahrzeughochachse vor.

In einer vorteilhaften Weiterbildung umfasst die untere Längsträgerstruktur einen wenigstens abschnittsweise unterhalb des Aufnahmeraums verlaufenden Basisabschnitt und einen (fest mit dem Basisabschnitt verbundenen) Vorderabschnitt. Dabei erstreckt sich der Vorderabschnitt von dem Basisabschnitt aus bis über die Vorderachseinheit. Der Vorderabschnitt dient zur tragenden Anbindung der Vorderachseinheit an den Fahrzeugrahmen. Insbesondere trägt der Vorderabschnitt eine Achsaufnahmestruktur. Insbesondere ermöglicht die Achsaufnahmestruktur eine pendelnde Aufnahme der Vorderachseinheit. Insbesondere ist der Vorderabschnitt vor dem Aufnahmeraum angeordnet. Insbesondere verläuft der Vorderabschnitt in einer Z-Ebene oberhalb des Basisabschnitts und unterhalb der oberen Längsträgerstruktur. Insbesondere verläuft der Vorderabschnitt in einer Z-Ebene, welche den Aufnahmeraum schneidet. Insbesondere verläuft der Vorderabschnitt in einer Z-Ebene oberhalb der Vorderachseinheit. Insbesondere stellen der Basisabschnitt und vorzugsweise auch der Vorderabschnitt einen Teil der Umschließungsstruktur bereit.

In einer bevorzugten Ausgestaltung sind an der Vorderachseinheit kleinere Räder als in der Hinterachseinheit vorgesehen. Die Hinterachseinheit ist dann insbesondere an dem Basisabschnitt angeordnet und mittels einer Achsaufnahmestruktur befestigt. Der Basisabschnitt dient insbesondere zur tragenden Anbindung der Hinterachseinheit an den Fahrzeugrahmen. Insbesondere erstreckt sich der Basisabschnitt bis unter bzw. bis an die Hinterachseinheit. Der Basisabschnitt verläuft insbesondere vom Vorderabschnitt bis zum hinteren Endbereich des Fahrzeugrahmens.

In einer Ausgestaltung, bei welcher an der Vorderachseinheit und der Hinterachseinheit gleich große Räder vorgesehen sind (sog. Trac-Bauweise), weist die untere Längsträgerstruktur vorzugsweise einen (fest mit dem Basisabschnitt verbundenen) Heckabschnitt auf. Insbesondere erstreckt sich der Heckabschnitt von dem Basisabschnitt aus bis über die Hinterachseinheit. Insbesondere dient der Heckabschnitt zur tragenden Anbindung der Hinterachseinheit an den Fahrzeugrahmen. Insbesondere verläuft der Heckabschnitt in einer Z-Ebene oberhalb des Basisabschnitts und unterhalb der oberen Längsträgerstruktur. Insbesondere verläuft der Heckabschnitt in einer Z-Ebene, welche den Aufnahmeraum schneidet. Insbesondere verläuft der Heckabschnitt in einer Z-Ebene oberhalb der Hinterachseinheit. Insbesondere ist der Heckabschnitt hinter dem Aufnahmeraum angeordnet.

Der Basisabschnitt umfasst insbesondere wenigstens zwei beabstandet nebeneinander (parallel) verlaufende Längsträger. Der Vorderabschnitt und/oder der Heckabschnitt umfassen insbesondere wenigstens zwei beabstandet nebeneinander (parallel) verlaufende Längsträger.

Es ist vorteilhaft und möglich, dass der Vorderabschnitt in Bezug auf die Fahrzeugquerrichtung schmaler als der Basisabschnitt ausgebildet ist. Mit anderen Worten, eine auf die Fahrzeugquerrichtung bezogene Breite des Vorderabschnitts ist geringer als eine Breite des Basisabschnitts. Dabei ist die Bockstruktur, insbesondere wenigstens die vordere Bockeinheit, vorzugsweise an dem Vorderabschnitt befestigt. Dadurch kann sich die Umschließungsstruktur möglichst weit nach vorne erstrecken, sodass mehr Bauraum für den Aufnahmeraum und somit auch mehr Batteriekapazität bereitgestellt werden kann. Zudem wird auch bei einer breiteren Energiespeichereinheit eine besonders gute Sicht nach vorne erreicht.

Zur Anbindung des schmaleren Vorderabschnitts an den breiteren Basisabschnitt weist die untere Längsträgerstruktur insbesondere eine Verbindungsstruktur auf. Die Verbindungsstruktur weist beispielsweise wenigstens eine Querträgereinheit oder dergleichen auf. Die Querträgereinheit umfasst insbesondere für die Fahrzeuglängsseiten jeweils wenigstens einen Querträger.

Zusätzlich oder alternativ kann die Bockstruktur und insbesondere die vordere Bockeinheit an dem Basisabschnitt befestigt sein. Besonders bevorzugt ist die Bockstruktur wenigstens dort an der unteren Längsträgerstruktur angebunden, wo der Vorderabschnitt von oberhalb der Achseinheit nach unten auf dem Basisabschnitt zuläuft.

Möglich ist auch, dass der Vorderabschnitt und der Basisabschnitt in Bezug auf die Fahrzeugquerrichtung schmaler als der Heckabschnitt ausgebildet sind. Mit anderen Worten, die Taillierung erfolgt dann nicht an der Position der vorderen Bockeinheit, sondern an der Position der hinteren Bockeinheit.

Es ist möglich, dass die Bockstruktur und insbesondere die hintere Bockeinheit an dem Heckabschnitt und/oder an dem Basisabschnitt befestigt ist. Insbesondere ist der Heckabschnitt dann in Bezug auf die Fahrzeugquerrichtung schmaler als der Basisabschnitt ausgebildet. Eine solche Ausgestaltung ist besonders vorteilhaft, wenn eine Trac-Bauweise vorgesehen ist.

Bei einer Trac-Bauweise ist insbesondere auch eine vordere Taillierung vorgesehen. Es kann aber auch gar keine Taillierung vorgesehen sein.

In einer besonders bevorzugten und vorteilhaften Ausgestaltung ist an der Umschließungsstruktur, vorzugsweise an der Bockstruktur und/oder an der oberen Längsträgerstruktur, wenigstens eine Fahrerhausaufnahme zur Befestigung eines Fahrerhauses und/oder wenigstens eine Zusatzaufnahme angeordnet. Insbesondere sind die Fahrerhausaufnahme und/oder die Zusatzaufnahme fest mit der Umschließungsstruktur verbunden. Insbesondere können wahlweise das Fahrerhaus oder die Steuervorrichtung oder die Zusatzaufnahme an der Umschließungsstruktur montiert werden. Die Traktorteilstruktur kann wenigstens ein Fahrerhaus umfassen. Zusätzlich oder alternativ kann die Fahrerhausaufnahme wenigstens teilweise an einer Trägerkonsole angebunden sein.

Insbesondere ist die Zusatzaufnahme vorgesehen, wenn auf ein Fahrerhaus verzichtet werden kann. Das ist insbesondere dann der Fall, wenn die Zugmaschine für ein autonomes und/oder ferngesteuertes Fahren ausgebildet ist. Insbesondere kann an der Zusatzaufnahme eine Steuervorrichtung für das autonome und/oder ferngesteuerte Fahren befestigt werden. Möglich ist auch, dass an der Zusatzaufnahme wenigstens eine Zusatzkomponente und beispielsweise eine weitere Energiespeichereinheit und/oder eine Koppelvorrichtung für ein Anbaugerät oder dergleichen montiert werden kann. Dadurch kann die Traktorteilstruktur konstruktiv unaufwendig mit einem Fahrerhaus ausgestattet oder für einen autonom fahrenden bzw. ferngesteuerten Traktor eingesetzt werden.

Die Befestigung des Fahrerhauses an der Umschließungsstruktur bietet eine besonders sichere und zugleich Bauraum sparende Befestigung des Fahrerhauses. Dabei kann das Fahrerhaus in einer erhöhten Position über dem Aufnahmeraum angeordnet und zugleich direkt am Fahrzeugrahmen montiert werden. Die Fahrerhausaufnahme umfasst wenigstens eine und vorzugsweise wenigstens zwei Aufnahmeeinheiten. Insbesondere ist an der vorderen Bockeinheit und/oder an der hinteren Bockeinheit (jeweils) wenigstens eine Aufnahmeeinheit angeordnet. Insbesondere ist wenigstens eine Aufnahmeeinheit als Schwenklager zum Kippen des Fahrerhauses ausgebildet (insbesondere wenigstens die vordere Aufnahmeeinheit). Insbesondere ist wenigstens eine Aufnahmeeinheit mit einer Dämpfereinrichtung ausgestattet (insbesondere wenigstens die hintere Aufnahmeeinheit). Die Dämpfereinrichtung umfasst z. B. wenigstens ein Feder-DämpferElement. Das Fahrerhaus kann auch nicht-kippbar ausgebildet sein. Insbesondere ist das Fahrerhaus kein tragendes Bauteil des Fahrzeugrahmens. Insbesondere ist die Umschließungsstruktur kein Teil des Fahrerhauses. Insbesondere sind die Umschließungsstruktur und das Fahrerhaus separate Komponenten.

Es ist möglich und vorteilhaft, dass die Bockstruktur an einem vorderen Endbereich schmaler (in Bezug auf eine Breite in Fahrzeugquerrichtung) als an einem hinteren Endbereich ausgebildet ist. Insbesondere umfasst die obere Längsträgerstruktur wenigstens zwei Längsstreben, welche sich ausgehend von dem vorderen Endbereich mit zunehmendem Abstand zueinander zu dem hinteren Endbereich erstrecken. Beispielsweise sind die Längsstreben v-förmig zueinander angeordnet. Bei einer Ausgestaltung mit einem Heckabschnitt kann vorgesehen sein, dass sich die Längsstreben ausgehend von dem vorderen Endbereich zunächst mit zunehmendem Abstand zueinander erstrecken und dann wieder mit abnehmendem Abstand zueinander zu dem hinteren Endbereich verlaufen. Möglich sind auch parallel oder gekrümmt verlaufende Längsstreben.

In einer bevorzugten und vorteilhaften Ausgestaltung umgibt bzw. begrenzt die Umschließungsstruktur, vorzugsweise wenigstens die hintere Bockeinheit, wenigstens teilweise einen Maschinenaufnahmeraum für eine Fahrmotoreinrichtung. Insbesondere ist der Maschinenaufnahmeraum hinter dem Aufnahmeraum angeordnet.

Insbesondere ist der Maschinenaufnahmeraum wenigstens abschnittsweise zwischen den Achseinheiten (in Bezug auf die Fahrzeuglängsachse bzw. X-Achse) angeordnet. Insbesondere dient der Maschinenaufnahmeraum auch zur Aufnahme wenigstens eines weiteren Aggregats. Ein solches Aggregat ist insbesondere aus einer Gruppe von Aggregaten entnommen, umfassend: Getriebeeinrichtung und beispielsweise ein Verteilergetriebe, Hydraulikanlage und insbesondere Antriebsmaschine für die Hydraulikanlage, Leistungselektronik, Kühleinrichtung für die Energiespeichereinheit und/oder für die Fahrmotoreinrichtung, Zapfwelleneinrichtung mit einer Heckzapfwelle und/oder Frontzapfwelle und/oder Antriebsmaschine und/oder Zapfwellengetriebe.

Insbesondere ragt die Fahrmotoreinrichtung und vorzugsweise wenigstens ein Fahrmotor abschnittsweise durch die Umschließungsstruktur in den Aufnahmeraum hinein. Der Maschinenaufnahmeraum und der Aufnahmeraum sind vorzugsweise miteinander verbunden, sodass ich wenigstens ein Fahrmotor und/oder wenigstens eine Antriebsmaschine und/oder wenigstens ein Aggregat wenigstens abschnittsweise vom Maschinenaufnahmeraum in den Aufnahmeraum erstrecken kann.

In einer vorteilhaften Ausgestaltung ist wenigstens eine Trägerkonsole vorgesehen. Die Trägerkonsole dient insbesondere zur Anbindung einer Anhängerkupplung und/oder eines Heckkrafthebers und/oder einer Heckzapfwelle an den Fahrzeugrahmen. Insbesondere erstreckt sich die Trägerkonsole (im Wesentlichen) in Fahrzeughochrichtung. Insbesondere weist die Trägerkonsole eine plattenartige bzw. quaderförmige Grundgeometrie auf.

Es ist möglich, dass die Trägerkonsole und/oder die Kopplungsstruktur wenigstens teilweise durch die hintere Bockeinheit bereitgestellt werden. Auch die Front-Trägerkonsole kann durch die vordere Bockeinheit bereitgestellt werden.

Beispielsweise kann die hintere Bockeinheit hinter bzw. über der Hinterachseinheit angeordnet werden und zur Aufnahme des Heckkrafthebers oder einer Anhängerkupplung dienen. Dadurch wird eine weitere Funktionsintegration in Fahrzeugrahmen erreicht. Beispielsweise werden die Trägerkonsole und die hintere Bockeinheit eine zusammengefasste Struktur.

Vorzugsweise ist die Trägerkonsole mit einem unteren Endbereich an der unteren Längsträgerstruktur und/oder an der Hinterachseinheit befestigt. Es ist vorteilhaft und bevorzugt, dass die Trägerkonsole mittels wenigstens einer Kopplungsstruktur an der Bockstruktur und vorzugsweise wenigstens an der hinteren Bockeinheit und/oder an der oberen Längsträgerstruktur (in tragender Weise) befestigt ist. Insbesondere weist die hintere Bockeinheit eine Anbindungsstruktur für die Trägerkonsole auf. Die Kopplungsstruktur umfasst vorzugsweise Zugstreben und/oder Druckstreben. Die Zugstreben und/oder Druckstreben können auch durch einen plattenartigen Körper bereitgestellt werden. Insbesondere ist die Trägerkonsole druckfest und/oder zugfest mit der Bockstruktur verbunden. Es ist möglich, dass die Kopplungsstruktur auch an der unteren Längsträgerstruktur und/oder an der oberen Längsträgerstruktur zugfest und/oder druckfest angebunden ist. Das ermöglicht eine Bauraum sparende und zugleich sehr belastbare Anbindung der Trägerkonsole und eine weitere Funktionsintegration der Umschließungsstruktur. Zusätzlich oder alternativ kann die Trägerkonsole an der Hinterachseinheit befestigt sein.

Es ist möglich und vorteilhaft, dass die Trägerkonsole und die Kopplungsstruktur und die Umschließungsstruktur zusammen einen (kastenartigen bzw. gehäuseartigen) Aufnahmekörper bereitstellen. Insbesondere ist in dem Aufnahmekörper der Maschinenaufnahmeraum für die Fahrmotoreinrichtung untergebracht. Das ermöglicht eine gut geschützte, Bauraum sparende und gewichtsoptimierte Bereitstellung des Maschinenaufnahmeraums. In einer vorteilhaften Ausgestaltung weist die Umschließungsstruktur wenigstens einen Konsolen-Längsträger auf. Der Konsolen-Längsträger stellt insbesondere eine (gedachte) Verlängerung der oberen Längsträgerstruktur dar, welche sich von der hinteren Bockeinheit zur Trägerkonsole erstreckt.

Es kann auch eine im Frontbereich angeordnete Front-Trägerkonsole vorgesehen sein. Diese Trägerkonsole dient insbesondere zur Anbindung einer Anhängerkupplung und/oder eines Frontkrafthebers und/oder einer Frontzapfwelle an den Fahrzeugrahmen. Insbesondere ist die Front-Trägerkonsole mit einem unteren Endbereich an der unteren Längsträgerstruktur und beispielsweise an dem Vorderabschnitt befestigt. Insbesondere ist die Front-Trägerkonsole mittels wenigstens einer Kopplungsstruktur an der Bockstruktur und vorzugsweise wenigstens an der vorderen Bockeinheit (in tragender Weise) befestigt. Vorzugsweise ist die Front-Trägerkonsole analog zur Trägerkonsole am Heck ausgebildet. Es ist möglich, dass die Front-Trägerkonsole wenigstens teilweise durch die vordere Bockeinheit bereitgestellt wird.

Vorzugsweise treibt die im Maschinenaufnahmeraum angeordnete Fahrmotoreinrichtung die Hinterachseinheit und auch die Vorderachseinheit an. Dabei ist bevorzugt, dass unterhalb des Aufnahmeraums für die Energiespeichereinheit wenigstens eine von der im Maschinenaufnahmeraum angeordneten Fahrmotoreinrichtung angetriebene Antriebswelleneinheit (durch die Umschließungsstruktur) zur Vorderachseinheit verläuft. Insbesondere ist die Fahrmotoreinrichtung mittels wenigstens einer Antriebswelleneinheit mit der Vorderachseinheit verbunden. Es ist bevorzugt und vorteilhaft, dass in dem vom Aufnahmekörper bereitgestellten Maschinenaufnahmeraum auch der wenigstens eine Fahrmotor zum Antreiben der Vorderachseinheit angeordnet ist.

Es ist möglich und vorteilhaft, dass für die Hinterachseinheit und die Vorderachseinheit jeweils wenigstens ein Fahrmotor vorgesehen ist. Möglich ist auch, dass für die Hinterachseinheit und die Vorderachseinheit wenigstens ein gemeinsamer Fahrmotor vorgesehen ist. Insbesondere ist der gemeinsame Fahrmotor dann an ein Verteilergetriebe gekoppelt. Möglich ist auch, dass die Antriebswelleneinheit direkt oder über ein Motorgetriebe an dem gemeinsamen Fahrmotor angebunden ist. Vorzugsweise ist auch das Verteilergetriebe wenigstens abschnittsweise im Maschinenaufnahmeraum und/oder wenigstens abschnittsweise im Aufnahmeraum für die Energiespeichereinheit angeordnet. Insbesondere erstreckt sich die Antriebswelleneinheit von dem Verteilergetriebe bis zur Vorderachseinheit.

In einer vorteilhaften Ausgestaltung verläuft die Antriebswelleneinheit unterhalb des Aufnahmeraums für die Energiespeichereinheit. Vorzugsweise verläuft die Antriebswelleneinheit durch die Umschließungsstruktur. Insbesondere erstreckt sich die Antriebswelleneinheit von der Fahrmotoreinrichtung aus und/oder von dem Verteilergetriebe aus durch die Umschließungsstruktur zu der Vorderachseinheit. Insbesondere verläuft die Antriebswelleneinheit wenigstens abschnittsweise auf Höhe der unteren Längsträgerstruktur. Insbesondere verläuft die Antriebswelleneinheit zwischen zwei Längsträgern der unteren Längsträgerstruktur bzw. des Basisabschnitts.

Es ist möglich und vorteilhaft, dass die Fahrmotoreinrichtung wenigstens einen vor dem Aufnahmeraum angeordneten Fahrmotor für die Vorderachseinheit umfasst. Insbesondere umfasst die Fahrmotoreinrichtung wenigstens einen im Maschinenaufnahmeraum angeordneten Fahrmotor für die Hinterachseinheit. Die Fahrmotoreinrichtung ist insbesondere nur teilweise im Maschinenaufnahmeraum angeordnet. Insbesondere ist der Fahrmotor für die Vorderachseinheit oberhalb der Vorderachseinheit angeordnet. Dabei ist vorzugsweise ein Verlagerungsgetriebe vorgesehen, um den Fahrmotor an die darunter liegende Vorderachseinheit zu koppeln. Der Fahrmotor für die Vorderachseinheit ist vorzugsweise an dem Vorderabschnitt und/oder an der Vorderachseinheit befestigt.

In einer vorteilhaften Weiterbildung ist in dem vom Aufnahmekörper bereitgestellten Maschinenaufnahmeraum wenigstens eine elektrische Antriebsmaschine für eine Zapfwelleneinrichtung und/oder wenigstens eine elektrische Antriebsmaschine für eine Arbeitshydraulikanlage angeordnet.

Es ist möglich und vorteilhaft, dass an der Umschließungsstruktur wenigstens eine Haltevorrichtung für die Energiespeichereinheit befestigt ist. Die Haltevorrichtung ist insbesondere dazu geeignet und ausgebildet, die Energiespeichereinheit durch seitliches Einschieben aufzunehmen und durch seitliches Herausziehen freizugeben. In einer vorteilhaften Ausgestaltung umfasst die Haltevorrichtung wenigstens eine Linearführungseinrichtung, an welcher die Energiespeichereinheit zum Einschieben und Herausziehen gelagert ist. Die Linearführungseinrichtung umfasst zum Beispiel wenigstens eine Rollenbahneinrichtung oder ist als eine solche ausgebildet. Insbesondere sind sowohl unterhalb als auch oberhalb der Energiespeichereinheit Linearführungseinheiten und beispielsweise Rollenbahnen angeordnet.

Die Haltevorrichtung kann wenigstens eine Anschlusseinrichtung umfassen. Insbesondere ist die Anschlusseinrichtung dazu geeignet und ausgebildet, die Energiespeichereinheit durch ein Einschieben in den Aufnahmeraum wenigstens teilweise automatisch an ein Hochvoltbordnetz und/oder an ein Kühlsystem zu koppeln. Insbesondere ist die Anschlusseinrichtung dazu geeignet und ausgebildet, die Energiespeichereinheit durch ein Herausziehen wenigstens teilweise automatisch von dem Hochvoltbordnetz und/oder dem Kühlsystem abzukoppeln. Die Anschlusseinrichtung umfasst insbesondere wenigstens eine Steckverbindung oder dergleichen. Möglich ist auch, dass die Verbindung der Energiespeichereinheit mit dem Hochvoltbordnetz bzw. dem Kühlsystem wenigstens teilweise manuell erfolgt.

Die Haltevorrichtung kann wenigstens einen die Bewegbarkeit der Energiespeichereinheit begrenzenden Endanschlag umfassen. Insbesondere ist der Endanschlag wahlweise an einer Fahrzeuglängsseite montierbar. Vorzugsweise ist eine Zustiegsleiter für das Fahrerhaus dort angeordnet, wo der Endanschlag montiert ist. Möglich ist auch, dass kein Endanschlag vorgesehen ist, sodass die Energiespeichereinheit beliebig von beiden Fahrzeuglängsseiten eingesetzt bzw. entnommen werden kann. Insbesondere ist der Endanschlag an der Umschließungsstruktur lösbar befestigt. Insbesondere verhindert der Endanschlag, dass die Energiespeichereinheit weiter in den Aufnahmeraum hineingeschoben werden kann, als bestimmungsgemäß vorgesehen ist.

Die Energiespeichereinheit weist vorzugsweise wenigstens eine Hebegerätaufnahme auf. Die Hebegerätaufnahme kann insbesondere mit einer Hebevorrichtung und z. B. einer (Palletten-) Gabel eines Gabelstaplers oder eines Radladers bzw. Teleskopladers gekoppelt werden. Dadurch kann die Energiespeichereinheit einfach mit der Pallettengabel aufgenommen und in den Aufnahmeraum eingeschoben bzw. herausgezogen werden.

Die Anmelderin behält sich vor, einen Fahrzeugrahmen zu beanspruchen, welcher für eine Traktorteilstruktur geeignet und ausgebildet ist, wie sie zuvor beschrieben wurde. Auch durch den Fahrzeugrahmen wird die zuvor gestellte Aufgabe besonders vorteilhaft gelöst.

Die Anmelderin behält sich vor, eine landwirtschaftliche Zugmaschine zu beanspruchen, welche eine Traktorteilstruktur umfasst, wie sie zuvor beschrieben wurde. Auch die landwirtschaftliche Zugmaschine, welche auch als Traktor bzw. Schlepper bezeichnet werden kann, löst die zuvor gestellte Aufgabe besonders vorteilhaft. Die landwirtschaftliche Zugmaschine weist vorzugsweise einen Allradantrieb auf. Die Zugmaschine weist insbesondere Hinterräder auf, welche größer als die Vorderräder sind. Möglich ist auch, dass die Zugmaschine gleich große Räder aufweist (Trac-Bauweise).

Im Rahmen der vorliegenden Erfindung beziehen sich Positionsangaben insbesondere auf das Koordinatensystem für Fahrzeuge. Das Koordinatensystem umfasst eine Fahrzeuglängsachse bzw. X-Achse und eine Fahrzeugquerachse bzw. Y-Achse und eine Fahrzeughochachse bzw. Z-Achse. Insbesondere beziehen sich die Positionsangaben im Rahmen der vorliegenden Erfindung auf eine bestimmungsgemäß an einer Zugmaschine montierte Traktorteilstruktur bzw. auf eine bestimmungsgemäß aufgestellte Zugmaschine. Insbesondere ist eine Z-Ebene durch die Fahrzeuglängsachse und die Fahrzeugquerachse aufgespannt. Die Angaben vorn und hinten beziehen sich insbesondere auf die bestimmungsgemäße Vorwärtsfahrtrichtung.

Die Energiespeichereinheit umfasst insbesondere eine Vielzahl von Batteriezellen. Die Energiespeichereinheit kann mehrere Batterieeinheiten und z. B. mehrere Batteriemodule umfassen. Es ist möglich, dass wenigstens ein weiterer Aufnahmeraum vorgesehen ist, in welchem wenigstens eine weitere Energiespeichereinheit und/oder wenigstens eine Batterieeinheit untergebracht ist. Die Energiespeichereinheit ist insbesondere als eine Hochvoltbatterie ausgebildet. Es ist möglich, dass wenigstens eine Niedervoltbatterie für ein Niedervoltbordnetz vorgesehen ist.

Insbesondere ist die Vorderachseinheit als eine Lenkachse ausgebildet. Die Hinterachseinheit ist insbesondere nicht lenkbar bzw. als Starrachse ausgebildet. Die Hinterachseinheit kann auch lenkbar sein. Insbesondere sind die Achseinheiten mittels Achsaufnahmestrukturen an der unteren Längsträgerstruktur befestigt. Insbesondere ist die Bockstruktur zwischen den Achsaufnahmestrukturen an der unteren Längsträgerstruktur befestigt. Die Achseinheiten sind mit jeweils zwei Radnaben ausgestattet. Die Radnaben können mit (Vorgelege-) Getrieben ausgestattet sein. Bei Positionsangaben mit Bezug auf die Achseinheiten werden die Radnaben insbesondere nicht berücksichtigt.

Die Antriebseinrichtung ist vorzugsweise als ein Allradantrieb ausgebildet. Insbesondere sind die Vorderachseinheit und/oder die Hinterachseinheit elektrisch angetrieben. Insbesondere umfasst die Antriebseinrichtung eine elektrische Fahrmotoreinrichtung mit wenigstens einem Fahrmotor. Die Fahrmotoreinrichtung kann wenigstens ein (Motor-) Getriebe umfassen, welches insbesondere direkt an den Fahrmotor gekoppelt ist. Beispielsweise ist ein Untersetzungsgetriebe vorgesehen. Wenn im Rahmen der vorliegenden Erfindung von einem Fahrmotor die Rede ist, wird darunter insbesondere auch dessen Getriebe verstanden.

Die obere Längsträgerstruktur und die untere Längsträgerstruktur verlaufen insbesondere wenigstens abschnittsweise parallel zueinander. Insbesondere verläuft die untere Längsträgerstruktur in Bezug auf ihre Haupterstreckungsebene horizontal. Die obere Längsträgerstruktur kann in Bezug auf ihre Haupterstreckungsebene parallel oder in einem definierten Winkel zur Haupterstreckungsebene der unteren Längsträgerstruktur bzw. zur Horizontalen angeordnet sein. Insbesondere erstreckt sich die untere Längsträgerstruktur nach vorne und/oder nach hinten über den Aufnahmeraum hinaus.

Die untere und/oder die obere Längsträgerstruktur können jeweils wenigstens zwei (beabstandet) nebeneinander verlaufende Längsträger bzw. Längsstreben umfassen. Es können die Längsträgerelemente miteinander verbinden verbindende Querträgerelemente vorgesehen sein. Die obere Längsträgerstruktur kann plattenförmig ausgebildet sein. Dann sind in einem plattenförmigen Körper insbesondere Ausnehmungen ausgebildet, sodass Träger-ähnliche Strukturen gebildet werden. Die untere und/oder die obere Längsträgerstruktur können jeweils wenigstens eine Aussteifungsstruktur umfassen. Die Aussteifungsstruktur kann z. B. als ein Querträgerelement und/oder als ein Knotenblech oder dergleichen ausgebildet sein.

Die Bockstruktur und die obere Längsträgerstruktur sind insbesondere einstückig miteinander verbunden. Beispielsweise kann dazu ein durchgehendes Formteil bzw. (Grob-) Blechteil vorgesehen sein. Möglich und vorteilhaft ist auch, dass die Bockstruktur und die obere Längsträgerstruktur durch separate (aber vorzugsweise fest miteinander gefügte) Bauteile bereitgestellte werden. Zum Fügen können im Rahmen der vorliegenden Erfindung insbesondere formschlüssige, kraftschlüssige und/oder stoffschlüssige (beispielsweise Schweißen oder Kleben) Fügetechniken zum Einsatz kommen. Insbesondere ist die Bockstruktur fest mit der oberen Längsstruktur verbunden. Insbesondere ist die Bockstruktur fest mit der unteren Längsträgerstruktur verbunden.

Insbesondere ist die Bockstruktur lösbar an der unteren Längsträgerstruktur befestigt und beispielsweise verschraubt. Das ermöglicht eine unaufwendige Montage und bietet bei Bedarf einen guten Zugang zum Aufnahmeraum bzw. zum Maschinenaufnahmeraum, wenn die Bockstruktur zusammen mit der oberen Längsträgerstruktur von der unteren Längsträgerstruktur demontiert ist. Möglich und vorteilhaft ist auch, dass die Bockstruktur und die untere Längsträgerstruktur unlösbar bzw. einstückig miteinander verbunden sind. Insbesondere ist ein Vorderabschnitt der unteren Längsträgerstruktur mit der vorderen Bockeinheit einstückig verbunden.

Die vordere und/oder die hintere Bockeinheit können mittels wenigstens einer Zugstrebe und/oder Druckstrebe an der oberen und/oder unteren Längsträgerstruktur angebunden sein. Insbesondere verläuft die Zugstrebe und/oder Druckstrebe quer zur Längsträgerstruktur und insbesondere quer zur Fahrzeughochachse.

Der Aufnahmeraum ist in Fahrzeugquerrichtung insbesondere durchgehend ausgebildet. Insbesondere erstreckt sich der Aufnahmeraum von einer Fahrzeuglängsseite bis zur anderen Fahrzeuglängsseite. Insbesondere stellt der Fahrzeugrahmen mit seiner Umschließungsstruktur eine in Fahrzeugquerrichtung durchgehende Öffnung für den Aufnahmeraum bereit. Insbesondere sind innerhalb des Aufnahmeraums keine tragenden Strukturen des Fahrzeugrahmens angeordnet, welche den Durchtritt der Energiespeichereinheit durch den Aufnahmeraum verhindern könnten. Vorzugsweise ragt die Energiespeichereinheit im bestimmungsgemäß montierten Zustand an beiden Fahrzeuglängsseiten aus der Umschließungsstruktur hervor. Dabei kann die Bewegbarkeit der Energiespeichereinheit an einer Fahrzeuglängsseite begrenzt sein, beispielsweise durch einen Endanschlag oder eine Zustiegsleiter oder dergleichen.

Die untere Längsträgerstruktur verläuft insbesondere tiefer als wenigstens eine der Achseinheiten oder auf der gleichen Z-Ebene wie wenigstens eine der Achseinheiten. Die untere Längsträgerstruktur verläuft insbesondere nicht höher als die Achseinheiten. Die obere Längsträgerstruktur verläuft insbesondere höher als die Achseinheiten. Die obere Längsträgerstruktur verläuft insbesondere höher als die Fahrmotoreinrichtung und/oder die Energiespeichereinheit und/oder das Vorderrad und/oder das Hinterrad. Insbesondere verläuft die obere Längsträgerstruktur auf der gleichen Höhe wie ein oberes Ende der Trägerkonsole.

Die untere Längsträgerstruktur und die obere Längsträgerstruktur und die Bockstruktur können direkt und/oder indirekt (mittels weiterer tragender Bauteile) miteinander verbunden sein. Insbesondere ist die hintere Bockeinheit direkt und/oder indirekt an die untere Längsträgerstruktur angebunden. Beispielweise ist die hintere Bockeinheit (auch oder nur) indirekt über die Hinterachseinheit und/oder die Achsaufnahmestruktur und/oder die Trägerkonsole und/oder die Kopplungsstruktur an der unteren Längsträgerstruktur angebunden.

Es ist möglich, dass die obere und/oder die untere Längsträgerstruktur wenigstens abschnittsweise abgewinkelt bzw. gekrümmt ausgebildet sind. Dann kann die Bockstruktur (die vordere und/oder die hintere Bockeinheit) wenigstens teilweise durch wenigstens einen abgewinkelten bzw. gekrümmten (endständigen) Abschnitt der Längsträgerstruktur bereitgestellt werden. Insbesondere sind die Längsträgerstruktur und die Bockstruktur dann wenigstens abschnittsweise einstückig miteinander verbunden.

Die obere Längsträgerstruktur kann mit (jeweils) einem Endbereich an der vorderen und/oder an der hinteren Bockeinheit angebunden sein. Möglich ist aber auch, dass die obere Längsträgerstruktur mit einem von ihrem Ende beabstandeten Bereich an der vorderen und/oder hinteren Bockeinheit angebunden ist. Zum Beispiel ragt die obere Längsträgerstruktur mit wenigstens einem Ende über die vordere und/oder die hintere Bockeinheit hinaus. Das überstehende Ende kann beispielweise an der Trägerkonsole oder an einer anderen Struktur angebunden sein.

Die Energiespeichereinheit umfasst insbesondere wenigstens eine Traktionsbatterie oder ist als eine solche ausgebildet. In einem solchen Fall können die Begriffe "Energiespeichereinheit" und "Traktionsbatterie" im Rahmen der vorliegenden Erfindung synonym verwendet werden. Die Traktionsbatterie ist beispielsweise eine Hochvoltbatterie. Die Energiespeichereinheit kann auch wenigstens einen Aufnahmebehälter und insbesondere einen Tank für ein Speichermedium umfassen oder als ein solcher ausgebildet sein. Das Speichermedium ist beispielweise Wasserstoff oder dergleichen. Der Aufnahmebehälter kann dann als Wasserstofftank bezeichnet werden. Insbesondere ist eine Brennstoffzelleneinrichtung vorgesehen, welche mit der Energiespeichereinheit verbunden ist, um das Speichermedium in elektrische Energie für die Antriebseinrichtung umzusetzen. Auch bei einem Aufnahmebehälter ist ein Wechselvorgang leer gegen voll oder neu gegen alt vorteilhaft.

Weitere Vorteile und Merkmale der vorliegenden Erfindung ergeben sich aus den Ausführungsbeispielen, die im Folgenden mit Bezug auf die beiliegenden Figuren erläutert werden.

In den Figuren zeigen:
- Figur 1: eine rein schematische Darstellung einer landwirtschaftlichen Zugmaschine mit einer erfindungsgemäßen Traktorteilstruktur in einer Seitenansicht;
- Figur 2: eine weitere rein schematische Darstellung der Traktorteilstruktur in einer Seitenansicht;
- Fig. 3-6: rein schematische Detaildarstellungen der Traktorteilstruktur in einer perspektivischen Ansicht;
- Figur 7: eine rein schematische Detaildarstellung der Traktorteilstruktur in einer Seitenansicht;
- Figur 8: eine rein schematische Darstellung eines Fahrzeugrahmens einer erfindungsgemäßen Traktorteilstruktur in einer perspektivischen Ansicht;
- Figur 9: eine rein schematische Darstellung einer landwirtschaftlichen Zugmaschine mit einer weiteren erfindungsgemäßen Traktorteilstruktur in einer Seitenansicht;
- Figur 10: eine rein schematische Darstellung der Traktorteilstruktur in einer perspektivischen Ansicht;
- Fig. 11-12: rein schematische Detaildarstellungen der Traktorteilstruktur in perspektivischen Ansichten; und
- Figur 13: eine weitere rein schematische Detaildarstellung der Traktorteilstruktur in einer Seitenansicht.

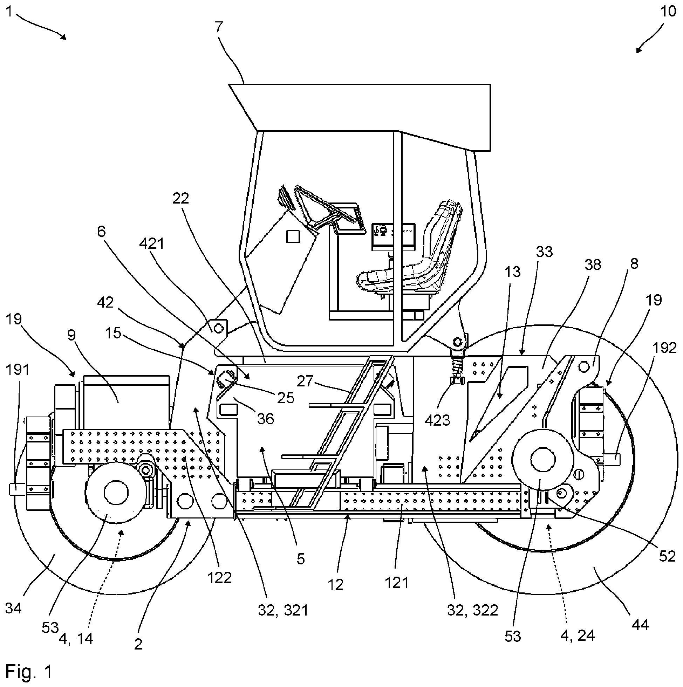

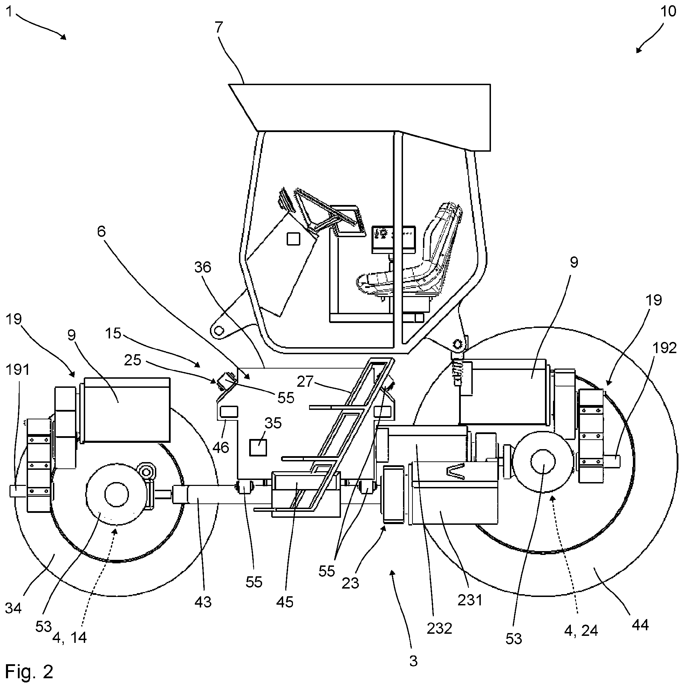

Die Figuren 1 und 2 zeigen eine landwirtschaftliche Zugmaschine 10 bzw. einen Traktor mit einer Traktorteilstruktur 1 mit einem Fahrzeugrahmen 2 und mit einer an dem Fahrzeugrahmen 2 aufgenommenen elektrischen Antriebseinrichtung 3 mit einer Fahrmotoreinrichtung 23. Zur Energieversorgung der Antriebseinrichtung 3 ist eine auswechselbare Energiespeichereinheit 6 in einem Aufnahmeraum 5 aufgenommen. Die Energiespeichereinheit ist hier beispielsweise eine Traktionsbatterie oder ein Aufnahmebehälter für Wasserstoff.

An dem Fahrzeugrahmen 2 sind zwei Achseinheiten 4 befestigt, nämlich eine Vorderachseinheit 14 und eine Hinterachseinheit 24. Die Räder 34, 44 sind mittels Radnaben 53 mit den Achseinheiten 4 verbunden. Die an der Hinterachseinheit 24 montierten Räder 44 sind hier größer als die an der Vorderachseinheit 14 montierten Räder 34 ausgebildet. Die hier vorgestellte Traktorteilstruktur 1 kann aber auch an einer Zugmaschine 10 in einer Trac-Bauweise vorteilhaft eingesetzt werden.

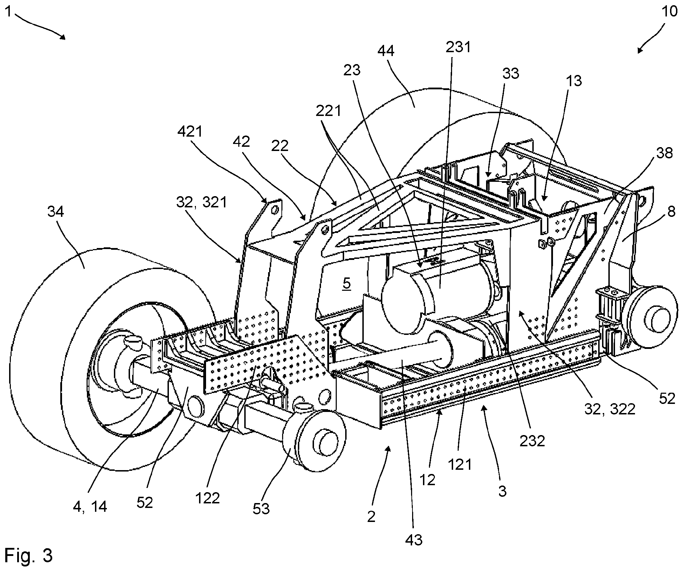

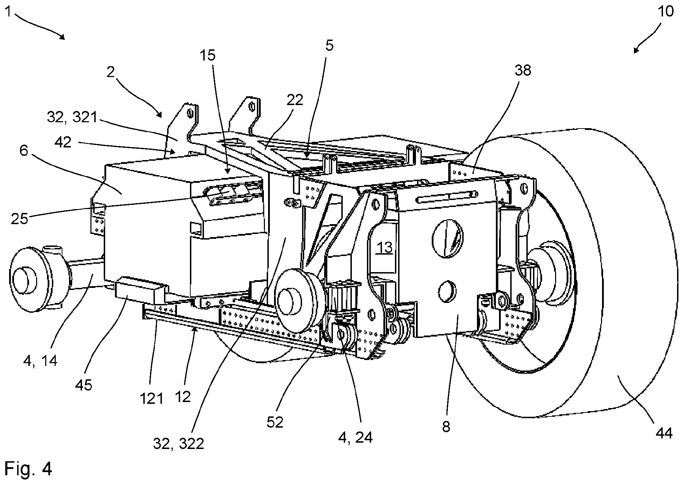

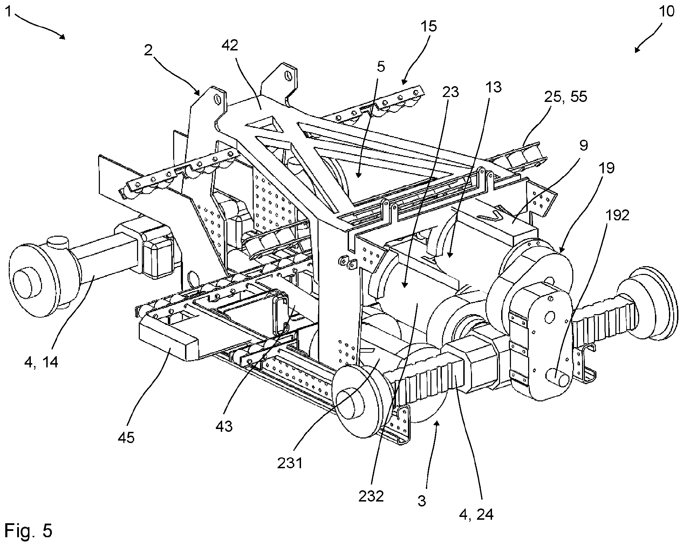

Für die weitere Beschreibung der Erfindung wird nachfolgend Bezug zu den Darstellungen der Figuren 1 bis 8 genommen. Um den Wechselvorgang der Energiespeichereinheit 6 möglichst bequem und einfach zu gestalten und zugleich eine besonders hohe Funktionalität des Traktors sowie eine möglichst große Batteriekapazität zu gewährleisten, ist der Aufnahmeraum 5 für die Energiespeichereinheit 6 hier in den Fahrzeugrahmen 2 integriert. Dazu weist der Fahrzeugrahmen 2 eine untere Längsträgerstruktur 12 und eine obere Längsträgerstruktur 22 sowie eine die obere und die untere Längsträgerstruktur 12, 22 miteinander verbindende Bockstruktur 32 auf. Diese Komponenten der Umschließungsstruktur 42 sind allesamt tragende Bauteile des Fahrzeugrahmens 2.

Dadurch wird eine ringartige Umschließungsstruktur 42 bereitgestellt, welche den Aufnahmeraum 5 nach vorne und nach hinten sowie nach oben und unten vollumfänglich umschließt. Die Umschließungsstruktur 42 ist an beiden Fahrzeuglängsseiten offen ausgebildet, sodass die Energiespeichereinheit 6 grundsätzlich von beiden Fahrzeuglängsseiten im Aufnahmeraum 5 zugänglich ist. In der hier gezeigten Variante ist jedoch an einer Fahrzeuglängsseite eine Zustiegsleiter 27 für ein Fahrerhaus 7 angeordnet. Dadurch kann die Energiespeichereinheit 6 nur von einer Fahrzeuglängsseite aus eingeschoben und herausgezogen werden.

Um die Energiespeichereinheit 6 sicher im Aufnahmeraum 5 zu verankern, ist an der Umschließungsstruktur 42 eine Haltevorrichtung 15 befestigt. Die Haltevorrichtung 15 ist hier mit einer Linearführungseinrichtung 25 ausgestattet, sodass auch eine schwere Energiespeichereinheit 6 leichtgängig in den Aufnahmeraum 5 eingeschoben und herausgezogen werden kann. Beispielsweise sind dazu vier oder mehr Rollenbahnen 55 vorgesehen, an denen die Energiespeichereinheit 6 geführt entlang rollen kann. Durch einen Endanschlag 45 wird gewährleistet, dass die Energiespeichereinheit 6 nicht über ihre vorgesehene Position hinaus eingeschoben werden kann.

Die Halteeinrichtung 15 weist hier eine Anschlusseinrichtung 35 auf (siehe Figur 2), sodass die Energiespeichereinheit 6 durch das Einschieben in den Aufnahmeraum automatisch mit einem Hochvoltbordnetz und/oder einem Kühlsystem gekoppelt wird. Durch das Herausziehen wird die Energiespeichereinheit 6 dann automatisch von der Anschlusseinrichtung 35 entkoppelt. Möglich ist aber auch, dass die Energiespeichereinheit 6 wenigstens teilweise manuell und beispielsweise durch manuelles Zusammenstecken bzw. Trennen von Steckverbindungen mit der Anschlusseinrichtung 35 kontaktiert wird.

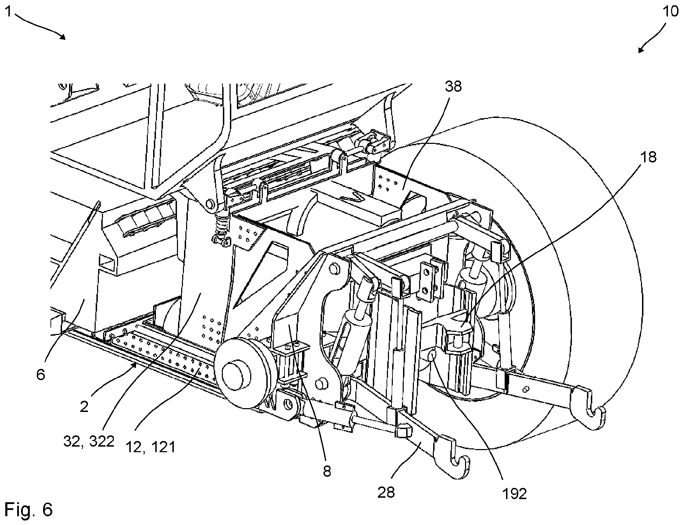

An dem Fahrzeugrahmen 2 ist hier eine Trägerkonsole 8 befestigt, welche zur Anbindung einer Anhängerkupplung 18 und eines hydraulischen Heckkrafthebers 28 dient (siehe Figur 6). Die Trägerkonsole 8 ist hier an der unteren Längsträgerstruktur 12 befestigt. Zudem ist die Trägerkonsole 8 in einem oberen Bereich mittels einer Kopplungsstruktur 38 auch mit einer hinteren Bockeinheit 322 der Bockstruktur 32 fest verbunden.

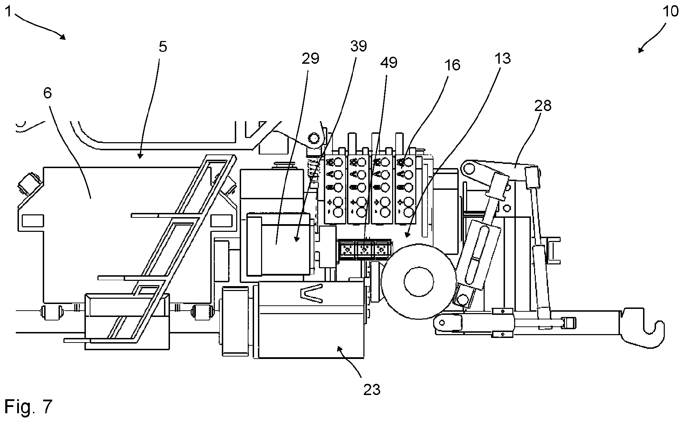

Die Umschließungsstruktur bildet zusammen mit der Trägerkonsole 8 und der Kopplungsstruktur 38 einen Aufnahmekörper 33, in welchem ein Maschinenaufnahmeraum 13 für die elektrische Fahrmotoreinrichtung 23 untergebracht ist. Zudem sind in dem Maschinenaufnahmeraum 13 hier noch eine elektrische Antriebsmaschine 9 für eine Heckzapfwelle 192 einer Zapfwelleneinrichtung 19 und eine elektrische Antriebsmaschine 29 für eine Hydraulikpumpenanordnung 49 einer Arbeitshydraulikanlage 39 sowie eine Leistungselektronik 16 eingehaust (siehe Figur 7). Die Leistungselektronik 16 umfasst beispielsweise wenigstens einen Wechselrichter zum Bereitstellen eines Wechselstroms für die Fahrmotoreinrichtung 23 aus einem Gleichstrom der Energiespeichereinheit 6.

Wie in der Figur 1 gut zu erkennen, weist die Zapfeneinrichtung 19 auch eine Frontzapfwelle 191 auf. Deren elektrische Antriebsmaschine 9 ist hier über der Vorderachseinheit 14 angeordnet und an dem Vorderabschnitt 122 befestigt. Die eigenständigen elektrischen Antriebsmaschinen 9 ermöglichen eine vom Fahrbetrieb völlig unabhängige Drehzahl und Drehmomentabgabe der Zapfwellen 191, 192. Denkbar ist auch, dass eine elektrische Arbeitsmaschine 9 Front- und Heckzapfwelle 191, 192 gemeinsam antreibt.

Die Energiespeichereinheit 6 ist mit einem Batteriegehäuse 36 ausgestattet, in welchem eine Vielzahl von Batteriezellen eingehaust sind. Um den Wechselvorgang z. B. mit einem Gabelstapler oder Hoflader durchführen zu können, ist das Batteriegehäuse 36 hier mit einer Hebegerätaufnahme 46 für eine Pallettengabel oder dergleichen ausgestattet.

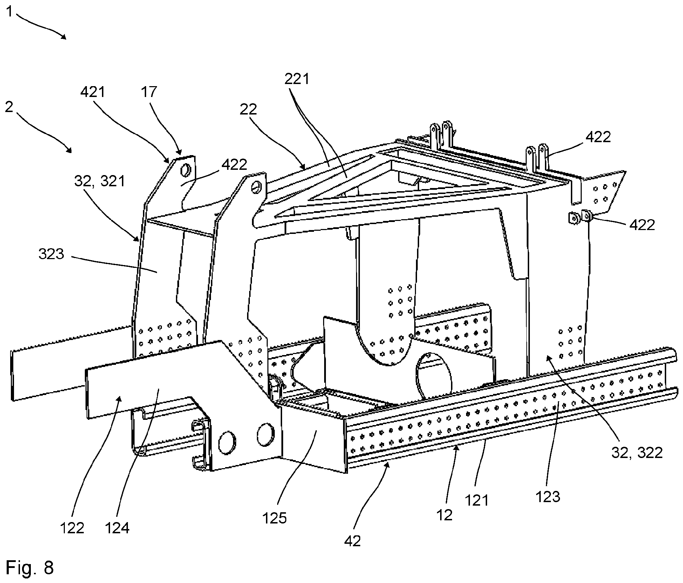

Der besondere Aufbau des Fahrzeugrahmens 2 und seiner Umschließungsstruktur 42 ist in der Detaildarstellung der Figur 8 besonders gut zu erkennen. Die untere Längsträgerstruktur 12 hat einen unterhalb des Aufnahmeraums verlaufenden Basisabschnitt 121 und einen Vorderabschnitt 122. Der Basisabschnitt 121 und der Vorderabschnitt 122 umfassen hier jeweils zwei sich entlang jeweils einer Fahrzeuglängsseite erstreckende Längsträger 123, 124.

Die Bockstruktur 32 umfasst eine vor dem Aufnahmeraum 5 angeordnete vordere Bockeinheit 321 und eine hinter dem Aufnahmeraum 5 angeordnete hintere Bockeinheit 322. Die obere Längsträgerstruktur 22 verbindet die vordere mit der hinteren Bockeinheit 321, 322. Die Bockeinheiten 321, 322 umfassen hier beispielsweise jeweils an jeweils einer Fahrzeuglängsseite angeordnete Hochträger 323.

Der Vorderabschnitt 122 ist schmaler als der Basisabschnitt 121 ausgebildet. Um den breiteren Basisabschnitt 121 mit dem schmaleren Vorderabschnitt 122 in tragender Weise zu verbinden, ist hier eine Verbindungsstruktur 125 vorgesehen. Diese umfasst beispielsweise für jeden Längsträger 123, 124 ein oder mehrere Querträgerelemente. Durch den schmaleren Vorderabschnitt 122 wird ein möglichst großer Raum zum Einschlagen der Vorderräder 34 geschaffen und zudem die Sicht nach vorne verbessert.

Korrespondierend zu der vorne schmaler ausgebildeten unteren Längsträgerstruktur 12 ist auch die vordere Bockeinheit 321 schmaler als die hintere Bockeinheit 322 ausgebildet. Entsprechend wird auch die obere Längsträgerstruktur 22 ausgehend von der vorderen Bockeinheit 321 in Richtung der hinteren Bockeinheit 322 breiter. In der hier gezeigten Variante umfasst die obere Längsträgerstruktur 22 mehrere Längsstreben 221, welche sich mit zunehmendem Abstand zueinander in Richtung der hinteren Bockeinheit 322 erstrecken.

Die Umschließungsstruktur 42 dient hier auch zur Befestigung des Fahrerhauses 7. Wie in der Figur 8 gut zu erkennen, ist dazu eine Fahrerhausaufnahme 421 mit mehreren Aufnahmeeinheiten 422 vorgesehen. In dem hier gezeigten Beispiel sind zwei Aufnahmeeinheiten 422 an der vorderen Bockeinheit 321 und/oder der oberen Längsträgerstruktur 22 befestigt. Diese dienen beispielsweise als Kipplager für das Fahrerhaus 7. Zudem sind an der hinteren Bockeinheit 322 bzw. im hinteren Bereich der oberen Längsträgerstruktur 22 weitere Aufnahmeeinheiten 422 angeordnet. Diese dienen z. B. wenigstens teilweise zur Aufnahme einer (Feder-) Dämpfereinrichtung 423 für das Fahrerhaus 7 (siehe Figur 1) .

Die in der Figur 8 gut zu erkennenden Strukturen der Fahrerhausaufnahme 421 können auch als Zusatzaufnahme 17 dienen bzw. ausgebildet sein. Daran kann beispielsweise eine Steuereinrichtung für autonomes oder ferngesteuertes Fahren oder eine weitere Energiespeichereinheit oder ein Anbaugerät oder dergleichen montiert werden.

Die Vorderachseinheit 14 ist hier mittels einer Achsaufnahmestruktur 52 pendelnd an dem Vorderabschnitt 122 angebunden. Die Hinterachseinheit 24 ist mittels einer Achsaufnahmestruktur 52 an dem Basisabschnitt 121 befestigt. Wenn eine Trac-Bauweise vorgesehen ist, kann auch das hintere Ende des Basisabschnitts 121 mit einem analog zum Vorderabschnitt 122 ausgebildeten Heckabschnitt ausgestattet sein.

Dabei ist die Hinterachseinheit 24 hier oberhalb der unteren Längsträgerstruktur 12 angeordnet. Die Vorderachseinheit 14 ist unterhalb des Vorderabschnitts 122 der unteren Längsträgerstruktur 12 angeordnet. Dadurch ergeben sich ein besonders großer Aufnahmeraum 5 und eine optimierte Lage des Schwerpunkts sowie eine besonders große Bodenfreiheit.

Im Maschinenaufnahmeraum 13 befinden sich sowohl hier ein Fahrmotor 232 für die Hinterachseinheit 24 als auch ein Fahrmotor 231 für die Vorderachseinheit 14. Mittels einer Antriebswelleneinheit 43 ist der Fahrmotor 231 mit der Vorderachseinheit 14 verbunden. Dabei verläuft die Antriebswelleneinheit 43 unterhalb des Aufnahmeraums 5 und durch die Umschließungsstruktur 42 hindurch.

Anstelle der separaten Fahrmotoren 231, 232 kann im Maschinenaufnahmeraum 13 auch ein gemeinsamer Fahrmotor 231 für beide Achseinheiten 4 untergebracht sein. Dann ist im Maschinenaufnahmeraum 13 vorzugsweise auch ein Verteilergetriebe untergebracht.

In einer alternativen Variante kann im Maschinenaufnahmeraum 13 auch nur der Fahrmotor 232 für die Hinterachseinheit 24 untergebracht sein. Dann ist der Fahrmotor 231 für die Vorderachseinheit 14 vorzugsweise oberhalb der Vorderachseinheit 14 angeordnet und mittels eines Verlagerungsgetriebes an die Vorderachseinheit 14 gekoppelt.

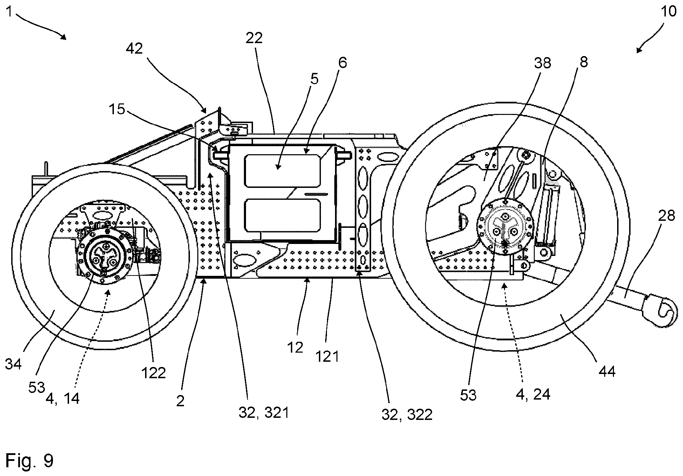

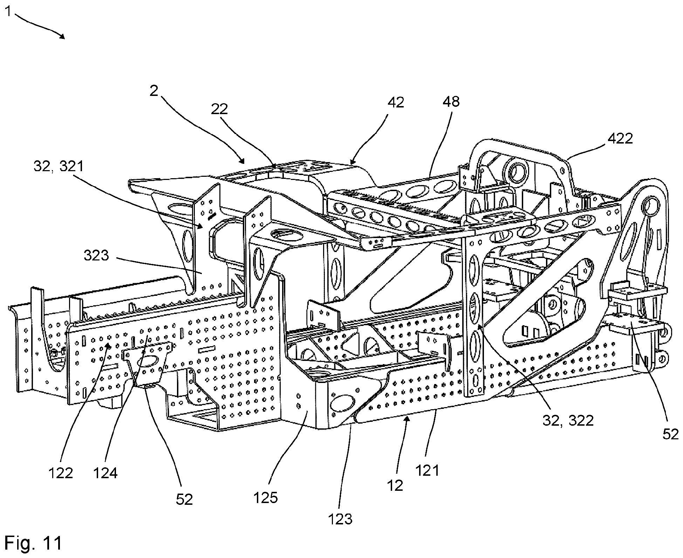

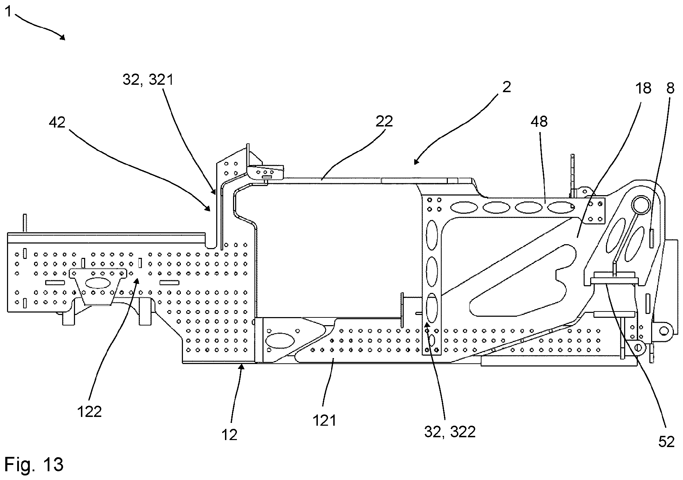

In den Figuren 9-13 ist eine Variante der zuvor vorgestellten Zugmaschine 10 gezeigt, bei welcher insbesondere die Umschließungsstruktur 42 vorteilhaft modifiziert ist. Die vordere Bockeinheit 321 ist hier einstückig mit dem Vorderabschnitt 122 der unteren Längsträgerstruktur 12 ausgebildet. Die Trägerkonsole 8 ist hier teilweise mittels der Hinterachseinheit 24 an der unteren Längsträgerstruktur 22 befestigt.

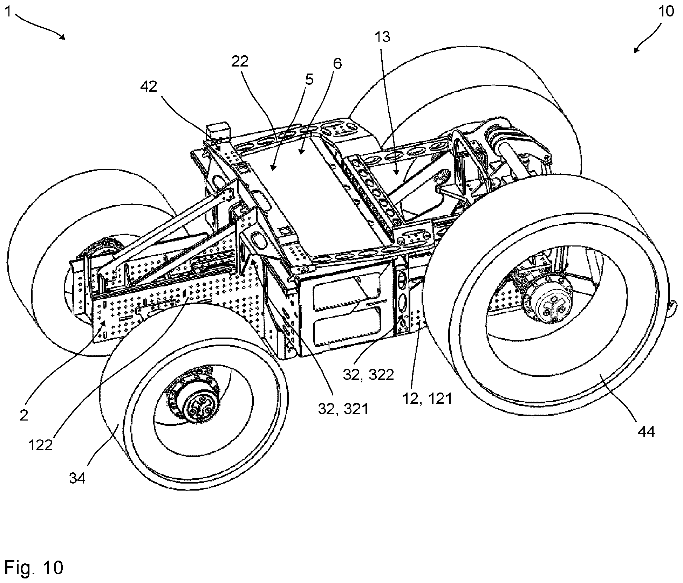

Gut zu erkennen sind hier auch die besondere Geometrie und der vorteilhafte Verlauf der oberen Längsträgerstruktur 22 sowie ihre Anbindung an die hintere Bockeinheit 322. Die hintere Bockeinheit 322 weist hier zudem einen Konsolen-Längsträger 48 auf, welcher eine (gedachte) Verlängerung der oberen Längsträgerstruktur 22 darstellt und sich von der hinteren Bockeinheit 322 zur Trägerkonsole 8 bzw. Kopplungsstruktur 38 erstreckt. In den Figuren 9 und 10 ist zudem noch eine Zug- und Druckstrebe dargestellt, welche sich von der vorderen Bockeinheit 321 zum Vorderabschnitt 122 erstreckt. So kann bei Bedarf die Bockstruktur 22 verstärkt werden.

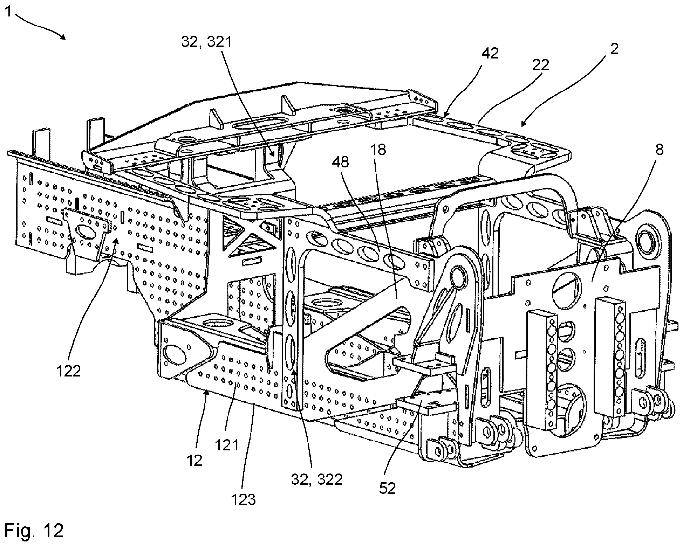

In einer Modifizierung der hier gezeigten Traktorteilstruktur 1 kann die hintere Bockeinheit 322 weiter nach hinten versetzt angeordnet sein. Dann befindet sich die hintere Bockeinheit 322 z. B. im Bereich der Achsaufnahmestruktur 52 und in etwa dort, wo in der Figur 12 die Trägerkonsole 8 angeordnet ist. Das hat den Vorteil, dass die hintere Bockeinheit 322 zugleich auch als Trägerkonsole 8 und Kopplungsstruktur 38 dienen kann, sodass deren Funktion in die Umschließungsstruktur 42 integriert wird.

**Bezugszeichenliste:**

| | | | |
|---|---|---|---|
| 1 | Traktorteilstruktur | 36 | Batteriegehäuse |
| 2 | Fahrzeugrahmen | 38 | Kopplungsstruktur |
| 3 | Antriebseinrichtung | 39 | Arbeitshydraulikanlage |
| 4 | Achseinheit | 42 | Umschließungsstruktur |
| 5 | Aufnahmeraum | 43 | Antriebswelleneinheit |
| 6 | Energiespeichereinheit | 44 | Rad, Hinterrad |
| 7 | Fahrerhaus | 45 | Endanschlag |
| 8 | Trägerkonsole | 46 | Hebegerätaufnahme |
| 9 | Antriebsmaschine | 48 | Konsolen-Längsträger |
| 10 | Zugmaschine | 49 | Hydraulikpumpe |
| 12 | Längsträgerstruktur | 52 | Achsaufnahmestruktur |
| 13 | Maschinenaufnahmeraum | 53 | Radnabe |
| 14 | Vorderachseinheit | 55 | Rollenbahn |
| 15 | Haltevorrichtung | 121 | Basisabschnitt |
| 16 | Leistungselektronik | 122 | Vorderabschnitt |
| 17 | Zusatzaufnahme | 123 | Längsträger |
| 18 | Anhängerkupplung | 124 | Längsträger |
| 19 | Zapfwelleneinrichtung | 125 | Verbindungsstruktur |
| 22 | Längsträgerstruktur | 191 | Frontzapfwelle |
| 23 | Fahrmotoreinrichtung | 192 | Heckzapfwelle |
| 24 | Hinterachseinheit | 221 | Längsstrebe |
| 25 | Linearführungseinrichtung | 231 | Fahrmotor |
| | | 232 | Fahrmotor |
| 27 | Zustiegsleiter | 321 | Bockeinheit |
| 28 | Heckkraftheber | 322 | Bockeinheit |
| 29 | Antriebsmaschine | 323 | Hochträger |
| 32 | Bockstruktur | 421 | Fahrerhausaufnahme |
| 33 | Aufnahmekörper | 422 | Aufnahmeeinheit |
| 34 | Rad, Vorderrad | 423 | Dämpfereinrichtung |
| 35 | Anschlusseinrichtung | | |

## Patentansprüche

1. Traktorteilstruktur (1) für eine elektrisch angetriebene landwirtschaftliche Zugmaschine (10), umfassend einen Fahrzeugrahmen (2) und wenigstens zwei an dem Fahrzeugrahmen (2) aufgenommene Achseinheiten (4) mit wenigstens einer Vorderachseinheit (14) und wenigstens einer Hinterachseinheit (24) und umfassend eine an dem Fahrzeugrahmen (2) aufgenommene elektrische Antriebseinrichtung (3), welche mittels wenigstens einer Energiespeichereinheit (6) mit Energie versorgbar ist, und umfassend wenigstens einen Aufnahmeraum (5) zur Unterbringung der Energiespeichereinheit (6),
**dadurch gekennzeichnet,**
**dass** der Aufnahmeraum (5) in den Fahrzeugrahmen (2) integriert ist und dass der Fahrzeugrahmen (2) dazu mittels einer unteren Längsträgerstruktur (12) und einer oberen Längsträgerstruktur (22) und einer die obere und die untere Längsträgerstruktur (12, 22) beabstandet miteinander verbindende Bockstruktur (32) eine Umschließungsstruktur (42) bereitstellt, welche den Aufnahmeraum (5) nach vorne und hinten sowie nach oben und unten umschließt.

2. Traktorteilstruktur (1) nach dem vorhergehenden Anspruch, wobei die Energiespeichereinheit (6) auswechselbar im Aufnahmeraum (5) aufgenommen ist, sodass eine insbesondere entladene oder verbrauchte Energiespeichereinheit (6) im Zuge eines Wechselvorgangs gegen eine andere insbesondere aufgeladene oder frischere Energiespeichereinheit (6) ausgetauscht werden kann, und wobei die Umschließungsstruktur (42) an wenigstens einer Fahrzeuglängsseite offen ausgebildet ist, sodass die Energiespeichereinheit (6) im Zuge des Wechselvorgangs von der wenigstens einen Fahrzeuglängsseite aus in den Aufnahmeraum (5) eingebracht und entnommen werden kann.

3. Traktorteilstruktur (1) nach einem der vorhergehenden Ansprüche, wobei die untere Längsträgerstruktur (12) und die obere Längsträgerstruktur (22) und die Bockstruktur (32) tragende Bauteile des Fahrzeugrahmens (2) sind.

4. Traktorteilstruktur (1) nach einem der vorhergehenden Ansprüche, wobei die Umschließungsstruktur (42) zwischen den Achseinheiten (4) angeordnet ist und wobei der Aufnahmeraum (5) wenigstens abschnittsweise höher als die Achseinheiten (4) angeordnet ist und/oder wobei der Aufnahmeraum (5) wenigstens abschnittsweise auf einer Z-Ebene mit wenigstens einer der Achseinheiten (4) angeordnet ist und/oder wobei der Aufnahmeraum (5) abschnittsweise tiefer als wenigstens eine der Achseinheiten (4) angeordnet ist.

5. Traktorteilstruktur (1) nach einem der vorhergehenden Ansprüche, wobei die Bockstruktur (32) eine vor dem Aufnahmeraum (5) angeordnete vordere Bockeinheit (321) und eine hinter dem Aufnahmeraum (5) angeordnete hintere Bockeinheit (322) aufweist und wobei die vordere Bockeinheit (321) mit einem vorderen Endbereich der oberen Längsträgerstruktur (22) und die hintere Bockeinheit (322) mit einem hinteren Endbereich der oberen Längsträgerstruktur (22) verbunden ist und wobei die vordere Bockeinheit (321) hinter der Vorderachseinheit (14) und vor dem Aufnahmeraum (5) an der unteren Längsträgerstruktur (12) befestigt ist und wobei die hintere Bockeinheit (322) hinter dem Aufnahmeraum (5) an der unteren Längsträgerstruktur (12) befestigt ist.

6. Traktorteilstruktur (1) nach einem der vorhergehenden Ansprüche, wobei die untere Längsträgerstruktur (12) einen unterhalb des Aufnahmeraums (5) verlaufenden Basisabschnitt (121) und einen Vorderabschnitt (122) aufweist, wobei sich der Vorderabschnitt (122) von dem Basisabschnitt (121) aus bis über die Vorderachseinheit (14) erstreckt und zur tragenden Anbindung der Vorderachseinheit (14) an den Fahrzeugrahmen (2) dient.

7. Traktorteilstruktur (1) nach einem der vorhergehenden Ansprüche, wobei an der Umschließungsstruktur (42), vorzugsweise an der Bockstruktur (32) und/oder an der oberen Längsträgerstruktur (22), eine Fahrerhausaufnahme (421) zur Befestigung eines Fahrerhauses (7) und/oder eine Zusatzaufnahme (17) angeordnet ist.

8. Traktorteilstruktur (1) nach einem der vorhergehenden Ansprüche, wobei die Umschließungsstruktur (42), vorzugsweise wenigstens die hintere Bockeinheit (322), wenigstens teilweise einen Maschinenaufnahmeraum (13) für eine Fahrmotoreinrichtung (23) umgibt.

9. Traktorteilstruktur (1) nach einem der vorhergehenden Ansprüche, umfassend wenigstens eine Trägerkonsole (8) zur Befestigung einer Anhängerkupplung (18) und/oder eines Heckkrafthebers (28), wobei die Trägerkonsole (8) mit einem unteren Endbereich an der unteren Längsträgerstruktur (12) und/oder an der Hinterachseinheit (24) befestigt ist und wobei die Trägerkonsole (8) mittels einer Kopplungsstruktur (38) an der Bockstruktur (32) und/oder an der oberen Längsträgerstruktur (22) befestigt ist.

10. Traktorteilstruktur (1) nach dem vorhergehenden Anspruch, wobei die Trägerkonsole (8) und die Kopplungsstruktur (38) und die Umschließungsstruktur (42) zusammen einen Aufnahmekörper (33) bereitstellen, in welchem wenigstens ein Maschinenaufnahmeraum (13) für eine Fahrmotoreinrichtung (23) untergebracht ist und wobei die im Maschinenaufnahmeraum (13) angeordnete Fahrmotoreinrichtung (23) die Hinterachseinheit (24) und auch die Vorderachseinheit (14) antreibt und wobei unterhalb des Aufnahmeraums (5) für die Energiespeichereinheit (6) wenigstens eine von der im Maschinenaufnahmeraum (13) angeordneten Fahrmotoreinrichtung (23) angetriebene Antriebswelleneinheit (43) durch die Umschließungsstruktur (42) zur Vorderachseinheit (14) verläuft.

11. Traktorteilstruktur (1) nach dem vorhergehenden Anspruch, wobei die Fahrmotoreinrichtung (23) wenigstens einen im Maschinenaufnahmeraum (13) angeordneten Fahrmotor (232) für die Hinterachseinheit (24) und wenigstens einen vor dem Aufnahmeraum (5) angeordneten Fahrmotor (231) für die Vorderachseinheit (14) umfasst und wobei der Fahrmotor (231) für die Vorderachseinheit (14) vorzugsweise an dem Vorderabschnitt befestigt ist.

12. Traktorteilstruktur (1) nach einem der beiden vorhergehenden Ansprüche, wobei in dem vom Aufnahmekörper (33) bereitgestellten Maschinenaufnahmeraum (13) wenigstens eine elektrische Antriebsmaschine (9) für eine Zapfwelleneinrichtung (19) und/oder wenigstens eine elektrische Antriebsmaschine (29) für eine Arbeitshydraulikanlage (39) angeordnet ist.

13. Traktorteilstruktur (1) nach einem der vorhergehenden Ansprüche, wobei an der Umschließungsstruktur (42) wenigstens eine Haltevorrichtung (5) für die Energiespeichereinheit (6) befestigt ist und wobei die Haltevorrichtung (5) wenigstens eine Linearführungseinrichtung (25) umfasst, an welcher die Energiespeichereinheit (6) zum Einschieben und Herausziehen gelagert ist.

14. Traktorteilstruktur (1) nach dem vorhergehenden Anspruch, wobei die Haltevorrichtung (15) wenigstens eine Anschlusseinrichtung (35) umfasst, welche dazu geeignet und ausgebildet ist, die Energiespeichereinheit (6) durch ein Einschieben in den Aufnahmeraum (5) wenigstens teilweise automatisch an ein Hochvoltbordnetz und/oder ein Kühlsystem zu koppeln.

15. Traktorteilstruktur (1) nach einem der beiden vorhergehenden Ansprüche, wobei die Haltevorrichtung (15) wenigstens einen die Bewegbarkeit der Energiespeichereinheit (6) begrenzenden Endanschlag (45) umfasst, welcher wahlweise an einer Fahrzeuglängsseite montierbar ist.
